# EUROPEAN PATENT SPECIFICATION

(11) **EP 3 541 127 B1**
(45) Date of publication and mention of the grant of the patent: **13.12.2023**
(21) Application number: 17868550.9
(22) Date of filing: 08.11.2017
(51) Int. Cl.: H04W 68/00, H04W 72/12, H04W 74/00

(54) **DOWNLINK PACKET TRANSMISSION METHOD AND DEVICE**
DOWNLINK-PAKET-ÜBERTRAGUNGSVERFAHREN UND - VORRICHTUNG
PROCÉDÉ ET DISPOSITIF DE TRANSMISSION DE LIAISON DESCENDANTE

(30) Priority: 11.11.2016 CN 201611005126
(43) Date of publication of application: 18.09.2019
(73) Proprietor: Vivo Mobile Communication Co., Ltd., Dongguan, Guangdong 523860 (CN)
(72) Inventor: ZHANG, Chenlu, Dongguan, Guangdong 523860 (CN); QIN, Fei, Dongguan, Guangdong 523860 (CN); LI, Xiaolong, Dongguan, Guangdong 523860 (CN)
(74) Representative: Winter, Brandl - Partnerschaft mbB
(86) International application number: PCT/CN2017/109835
(87) International publication number: WO 2018/086517

(56) References cited:
- EP-A1- 2 747 508
- CN-A- 101 127 933
- CN-A- 102 143 532
- CN-A- 102 300 331
- ASUSTEK: "Downlink data transmission and reception in NR new state", 3GPP DRAFT; R2-168090 DOWNLINK DATA TRANSMISSION AND RECEPTION IN NR NEW STATE_V1.0, 3RD GENERATION PARTNERSHIP PROJECT (3GPP), MOBILE COMPETENCE CENTRE ; 650, ROUTE DES LUCIOLES ; F-06921 SOPHIA-ANTI , vol. RAN WG2, no. Reno, Nevada, USA; 20161114 - 20161118 4 November 2016 (2016-11-04), XP051192372, Retrieved from the Internet: URL:http://www.3gpp.org/ftp/tsg_ran/WG2_RL 2/TSGR2_96/Docs/ [retrieved on 2016-11-04]
- QUALCOMM INCORPORATED: "DL early data transmission", 3GPP DRAFT; R2-1708240 DL EARLY DATA TRANSMISSION_EMTC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318142, Retrieved from the Internet: URL:http://www.3gpp.org/ftp/Meetings_3GPP_ SYNC/RAN2/Docs/ [retrieved on 2017-08-20]

## Description

### TECHNICAL FIELD

The present disclosure relates to the field of communication technology, and in particular, to a method for transmitting downlink data packets, and a device for transmitting downlink data packets.

### BACKGROUND

With a continuous development of wireless technology, a fifth generation (5G) mobile communication technology has become a development direction of a next generation mobile communication technology. According to current 5G requirements defined by the International Telecommunication Union (ITU), in a future 5G era, a connection density will reach 1 million/Km2, and an end-to-end minimum delay will reach 1ms. This puts extremely high demands on a standardization of mobile communication techniques. Meanwhile, the 5G will support all vertical industries in future, and new technologies will incubate many new business forms. In a requirement definition of a 3rd Generation Partnership Project (3GPP), application scenarios having been determined include following scenarios: enhanced Mobile Broadband (eMBB); massive Machine-Type-Communications (mMTC); ultra Reliable and Low Latency communications (uRLLC); wherein, the mMTC scenario is mainly optimized for an Internet of Things (IoT) scenario, such as smart water meters, smart electricity meters, wearable devices, etc. One of main features of this scenario is: a large number of terminals and connections, relatively small data transmission requirements and data concurrency. On the other hand, the uRLLC scene is also an important scene in 5G communication technology, such as a Vehicle to Everything scenario, virtual reality (VR)/augmented reality (AR) applications, telemedicine and the like. In this scenario, an end-to-end user plane latency and an end-to-end signaling plane latency are extremely low.

However, in a related system, a method for transmitting downlink data packets to a terminal generally includes steps as follow: a network side device transmits a paging message to a terminal; after the terminal receives the paging message, the terminal initiates a random access request message; the network side device responds to the random access request message, and returns a random access response message, and then transmits an initial Radio Resource Control (RRC) message according to data transmission parameters configured in the random access response message; and finally according to the initial RRC message from the network side device, a procedure for establishing a RRC connection is initiated; and after the RRC connection is established, the downlink data packets are transmitted to the terminal.

An European patent publication No. 2747508A1 discloses a method and a device for data transmission. In this patent publication, an eNB delivers a scheduling radio network temporary identifier RNTI to a terminal; the eNB schedules uplink resources and/or downlink resources for the terminal through a physical downlink control channel PDCCH scrambled by using the scheduling RNTI, receives uplink data sent by the terminal on the scheduled uplink resources, and sends downlink data to the terminal on the scheduled downlink resources. The terminal monitors the PDCCH scrambled by using the scheduling RNTI, and sends the uplink data and/or receives the downlink data by using the resources scheduled by the monitored PDCCH.

### SUMMARY

The present invention provides methods for transmitting downlink data packets and corresponding devices as per claims 1 and 6, 8 and 13. The invention is set out in the appended set of claims.

### BRIEF DESCRIPTION OF THE DRAWINGS

In order to illustrate technical solutions of some embodiments of the present disclosure more clearly, drawings used in description of some embodiments of the present disclosure will be described hereinafter briefly. Obviously, the following drawings merely relate to some embodiments of the present disclosure, and based on these drawings, a person skilled in the art may obtain other drawings without paying any creative effort.
Fig. 1 is a flowchart of a method for transmitting downlink data packets according to some non-claimed embodiments of the present disclosure;
Fig. 2 is a flowchart of a method for transmitting downlink data packets according to some embodiments of the present disclosure;
Fig. 3 is a schematic diagram of an example of the method for transmitting downlink data packets according to some non-claimed embodiments of the present disclosure;
Fig. 4 is a schematic diagram of an example of the method for transmitting downlink data packets according to some non-claimed embodiments of the present disclosure;
Fig. 5 is a flowchart of a method for transmitting downlink data packets according to some non-claimed embodiments of the present disclosure;
Fig. 6 is a flowchart of a method for transmitting downlink data packets according to some non-claimed embodiments of the present disclosure;
Fig. 7 is a flowchart of a method for transmitting downlink data packets according to some non-claimed embodiments of the present disclosure;
Fig. 8 is a flowchart of a method for transmitting downlink data packets according to some non-claimed embodiments of the present disclosure;
Fig. 9 is a structural schematic diagram of a terminal according to some embodiments of the present disclosure;
Fig. 10 is a structural schematic diagram of a terminal according to some embodiments of the present disclosure;
Fig. 11 is a structural schematic diagram of a terminal according to some embodiments of the present disclosure;
Fig. 12 is a structural schematic diagram of a terminal according to some embodiments of the present disclosure;
Fig. 13 is a structural schematic diagram of a terminal according to some embodiments of the present disclosure;
Fig. 14 is a structural schematic diagram of a terminal according to some embodiments of the present disclosure;
Fig. 15 is a structural schematic diagram of a network side device according to some non-claimed embodiments of the present disclosure;
Fig. 16 is a structural schematic diagram of a network side device according to some non-claimed embodiments of the present disclosure;
Fig. 17 is a structural schematic diagram of a network side device according to some non-claimed embodiments of the present disclosure;
Fig. 18 is a structural schematic diagram of a network side device according to some non-claimed embodiments of the present disclosure;
Fig. 19 is a structural schematic diagram of a network side device according to some non-claimed embodiments of the present disclosure;
Fig. 20 is a structural schematic diagram of a network side device according to some non-claimed embodiments of the present disclosure;
Fig. 21 is a structural schematic diagram of a core network device according to some non-claimed embodiments of the present disclosure;
Fig. 22 is a structural schematic diagram of a core network device according to some non-claimed embodiments of the present disclosure;
Fig. 23 is a structural schematic diagram of a core network device according to some non-claimed embodiments of the present disclosure;
Fig. 24 is a structural schematic diagram of a terminal according to some non-claimed embodiments of the present disclosure;
Fig. 25 is a structural schematic diagram of a terminal according to some non-claimed embodiments of the present disclosure;
Fig. 26 is a structural schematic diagram of a network side device according to some non-claimed embodiments of the present disclosure; and
Fig. 27 is a structural schematic diagram of a core network device according to some non-claimed embodiments of the present disclosure.

### DETAILED DESCRIPTION

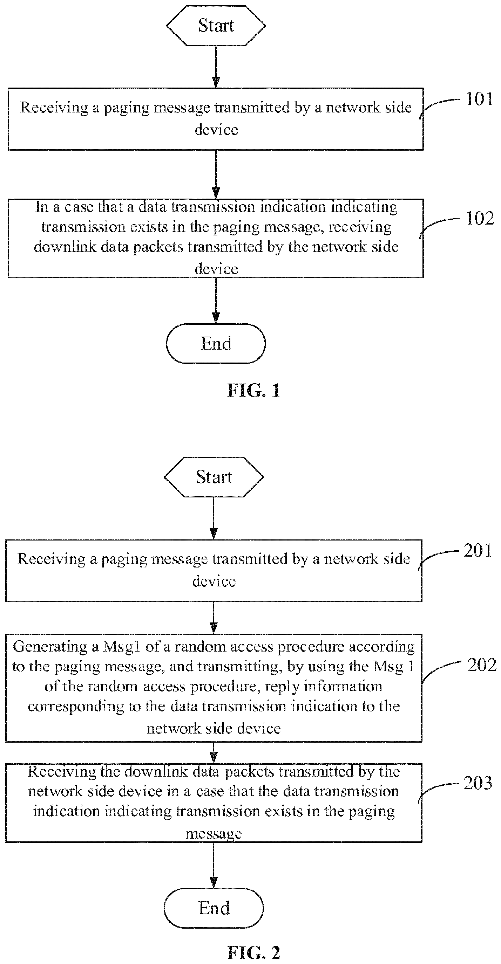

In particular, the embodiments referring to figures 1, 3 to 8 and 15 to 27 are not according to the invention and are present for illustration purposes only.

Technical solutions of some embodiments of the present disclosure will be described hereinafter in a clear and complete manner in conjunction with the drawings of the embodiments. Obviously, the described embodiments merely relate to a part of, rather than all of, the embodiments of the present disclosure. Based on these embodiments of the present disclosure, all other embodiments obtained by a person skilled in the art without paying any creative effort fall within the scope of the present disclosure.

In view of a problem that a transmission delay is significant when transmitting downlink data packets in the related art, some embodiments of the present disclosure provide a method for transmitting downlink data packets and a device for transmitted downlink data packets.

Referring to Fig. 1, Fig. 1 is a flowchart of a method for transmitting downlink data packets according to some non-claimed embodiments of the present disclosure. The method illustrated in Fig. 1 includes following steps 101-102.

Step 101: receiving a paging message transmitted by a network side device.

The paging message may be a paging message transmitted to the terminal after the network side device receives downlink data packets to be transmitted the terminal. Further, the network side device may further receive a paging message transmitted by a core network (CN) device; and the paging message indicates that the core network receives the downlink data packets to be transmitted to the terminal and is to transmit the downlink data packets to the network side device.

Further, the step 101 may also include: receiving a paging message transmitted by the network side device before an air-interface signaling connection is established. An air-interface signaling may be an end-to-end data transmission signaling protocol. For example, a related air-interface signaling includes a Radio Resource Control (RRC) signaling.

Step 102: in a case that a data transmission indication indicating transmission exists in the paging message, receiving the downlink data packets transmitted by the network side device.

In the embodiments of the present disclosure, the paging message may indicate the foregoing data transmission indication in an explicit or implicit manner, and the data transmission indication may include two states: data transmission or no data transmission. For example, in a case that the indicating is performed in the explicit manner, the paging message indicates whether data transmission exists or not through specific information; in a case that the indicating is performed in the implicit manner, the paging message may indicate whether data transmission exists or not by means of existence or non-existence of the specific information. For example, in a case that the specific information exists, the data transmission exists, and vice versa. The data transmission indication indicating the transmission may be understood as a case in which the network side device transmits the downlink data packets to the terminal without state transition of the terminal, or as a case in which the network side device transmits all or part of the downlink data packets to the terminal without the state transition of the terminal, and a remaining part of the downlink data packets may be transmitted after the state transition of the terminal, and the embodiments of the present disclosure are not limited thereto. The data transmission indication indicating the non-transmission may be understood as a case in which the network side device needs to transmit the downlink data packets after the terminal performs the state transition, that is, the terminal needs to perform the state transition before the downlink data packets are received by the terminal.

The state transition herein may refer to a change in a connected state of a RRC connection. For example, the state transition may be a transition from a state in which a RRC connection is not-established to a state in which the RRC connection is established. It should be noted that, in the embodiments of the present disclosure, a RRC_connected state may be a complete RRC_connected state or a fully active state.

After the terminal obtains the paging message, the terminal may identify whether the data transmission indication indicating the transmission exists in the paging message or not. In a case that the data transmission indication is identified as indicating the transmission, receiving of the downlink data packets transmitted by the network side device may be performed. It should be noted that the receiving of the downlink data packets transmitted by the network side device may be understood as: an action of receiving the downlink data packets is performed, and the downlink data packets may be successfully received in the action, or the downlink data packets may not be successfully received in the action. That is, in step 102, the downlink data packets may be successfully received, or may not successfully be received.

Following may be implemented by the foregoing steps: the terminal receives the paging message, and the data transmission indication indicates that the downlink data packets transmitted by the network side device may be directly received, and the state transition is not required, so that a delay of transmitting the downlink data packets may be reduced. Moreover, power consumptions of the terminal and the network side device may be reduced, and overheads of network signaling may be reduced. For example, under a condition that the downlink data packets of the terminal are only data packets of small sizes, the data packets may be directly transmitted without the state transition, such as in cases of notifying a network error and needing a re-attach procedure, or notifying a system information update procedure, or just for receiving application program configuration information of a mMTC terminal, etc. Subscription information of the terminal indicates that data is allowed to be received without the state transition, or a quality of service (QoS) feature of the downlink data packets allows data to be transmitted without the state transition. The data may be transmitted directly without the state transition, so as to reduce the delay of transmitting downlink data packets, and also reduce the power consumption of the terminal and reduce the overhead of the network signaling.

In the embodiments of the present disclosure, the foregoing method may be applied to any terminal having a communication function, such as: a mobile phone, a tablet personal computer, a laptop computer, and a personal digital assistant (PDA), a Mobile Internet Device (MID) or Wearable Device. It should be noted that a specific type of the terminal is not limited in the present disclosure.

In addition, in the embodiments of the present disclosure, the network side device may be a base station, and the base station may be a macro station, such as a Long Term Evolution (LTE) evolved Node B (eNB), a 5G NR NB, or the like; or a small station, such as a low power node (LPN), a pico base station, a femto base station, etc., or may be an access point (AP). The network side device may also be a network node including a central unit and a plurality of transmission-reception points (TRP) managed and controlled by the central unit. In addition, one or more cells are managed by one base station (for example: cells having different frequency points or formed through sector splitting). It should be noted that a specific type of the network side device is not limited in the present disclosure.

In the method for transmitting downlink data packets of the embodiments of the present disclosure, the paging message transmitted by the network side device is received; in a case that the data transmission indication indicating the transmission exists in the paging message, downlink data packets transmitted by the network side device are received. In this way, under a condition that the paging message is received, the downlink data packets may be directly transmitted, so that a case in the related art that after the paging message is received, the downlink data packets may not be transmitted before a RRC connection is established may not be needed, thereby reducing a delay for transmitting the downlink data packets.

Referring to Fig. 2, Fig. 2 is a flowchart of a method for transmitting downlink data packets according to some embodiments of the present disclosure. The method illustrated in Fig. 2 includes following steps 201-203.

Step 201: receiving a paging message transmitted by a network side device.

The paging message may be a paging message transmitted to a terminal after the network side device receives downlink data packets to be transmitted to the terminal. Further, the network side device may receive a paging message transmitted by the core network device, the paging message indicates that the core network device receives the downlink data packets of the terminal and is to transmit the downlink data packets to the network side device.

Further, step 201 may include receiving a paging message transmitted by the network side device before an air-interface signaling connection is established.

Step 202: generating a Message 1 (Msg1) of a random access procedure according to the paging message, and transmitting, by using the Message 1 of the random access procedure, reply information corresponding to the data transmission indication to the network side device, wherein the network side device transmits the downlink data packets according to the reply information.

In this step, after the terminal receives the paging message, the terminal may generate the Message 1 of the random access procedure according to the paging message, and transmit the reply information corresponding to the data transmission indication by using the Message 1. The reply information may indicate that the data transmission indication is agreed or disagreed, that is, the reply information may be whether an operation corresponding to the data transmission indication is performed or not. For example, in a case that the data transmission indication indicates the transmission, the reply information may mean that the downlink data packets transmitted by the network side device may be received or the downlink data packets transmitted by the network side device may not be received.

The above-mentioned reply information may be used to ensure that the network side device negotiates with the terminal when the network side device is to transmit the downlink data packets to the terminal, in order to avoid wasting resources overhead in a case that the network side device directly transmits the downlink data packets to the terminal but the terminal cannot receive the downlink data packets.

In addition, the above Message 1 may be a random access request message. The above Message 1 may indicate the above reply information in an explicit or implicit manner. The reply information include an identifier for indicating whether to receive the downlink data packets transmitted by the network side device or not, wherein the receiving herein indicates a state is not transitioned, and not receiving indicates a state is transitioned. For example, in a case that the Msg1 includes a 1-bit information, then '1' may indicate that the state transition is performed, that is, in a case that the data transmission indication indicates the transmission, that is, '1' indicates disagreement of state-transition, and in a case that the data transmission indication indicates the non-transmission, then '1' indicates agreement of state-transition. '0' means that the state transition is not performed. That is, in a case that the data transmission indication indicates the transmission, that is, 0 indicates agreement of the state-transition, and in a case that the above data transmission indication indicates the non-transmission, '0' indicates disagreement of the state-transition.

Optionally, the reply information may include a random access preamble sequence for indicating whether to receive the downlink data packets transmitted by the network side device or not. That is, a specific preamble group is used to identify whether to perform the state transition. The network side device receives the random access preamble sequence and may determine whether the terminal may receive the downlink data packets transmitted by the network side device or not. For example, the network side device and the terminal pre-negotiate which random access preamble sequence indicates that the terminal is to receive the downlink data packets transmitted by the network side device, and which random access preamble sequence indicates that the terminal is not to receive the downlink data packets transmitted by the network side device. In the embodiments, whether the downlink data packets transmitted by the network side device are to be received or not is indicated by the random access preamble sequences, the content of the Message 1 needs not to be added, so that transmission overhead may be reduced.

Optionally, the random access preamble sequences are provided with an identifier bit used to indicate whether the downlink data packets transmitted by the network side device are to be received or not. That is, the identifier bit in the random access preamble sequence may be an identifier bit used to indicate whether the downlink data packets transmitted by the network side device are to be received or not, so that the network side device may directly determine, by identifying the identifier bit, whether the terminal receives the downlink data packets transmitted by the network side device or not, so as to quickly determine, through the identifier bit, whether the terminal may receive the downlink data packets transmitted by the network side device or not, so as to improve a transmission efficiency of downlink data packets.

Optionally, after receiving the paging message transmitted by the network side device, before generating the Message 1 of the random access procedure according to the paging message and transmitting the reply information corresponding to the data transmission indication to the network side device by using the Message 1 of the random access procedure, the method further includes: determining, according to parameters of the terminal, whether to receive the downlink data packets transmitted by the network side device or not; wherein, the reply information is used to indicate whether to receive the downlink data packets transmitted by the network side device or not.

The parameters of the terminal may be parameters in the terminal itself, for example, UE (User Equipment) capability information or energy consumption information of the terminal. The parameters of the terminal may also be measurement information of the terminal. In the embodiments, the network side device may transmit the downlink data packets according to the parameters of the terminal determined by the terminal, so as to avoid a case in which the network side device directly transmits the downlink data packets to the terminal, but the terminal cannot receive the downlink data packets due to the parameters of the terminal, and an effect of saving resources is achieved.

Optionally, the step of determining whether to receive the downlink data packets transmitted by the network side device according to the parameters of the terminal includes: determining, according to the UE capability information of the terminal, whether to receive the downlink data packets transmitted by the network side device or not; or determining, according to the energy consumption information of the terminal, whether to receive the downlink data packets transmitted by the network side device or not, or determining, according to the measurement information of the terminal, whether to receive the downlink data packets transmitted by the network side device or not.

The UE capability information may be capability information indicating whether the terminal or the User Equipment itself supports receiving the downlink data packets without transitioning states of the terminal. In a case that the UE capability information indicates the capability of receiving the data packets without transitioning states of the terminal, the terminal may receive the downlink data packets transmitted by the network side device and notify the network side device by using the above reply information. Otherwise, the terminal notifies, by using the above reply information, the network side device of incapability of receiving the downlink data packets. The foregoing capability information may enable the network side device to transmit the downlink data packets according to UE capability information of the terminal determined by the terminal, so as to avoid a case that the network side device transmits the downlink data packets to the terminal directly but the capability of the terminal cannot enable the terminal to receive the downlink data packets, thereby causing wasting resource overheads, and to achieve an effect of saving resource overheads.

The foregoing energy consumption information may be that the terminal detects the energy consumption information of the terminal itself. In a case that the energy consumption information indicates that the terminal may receive the data packets without transitioning states of the terminal, the downlink data packets transmitted by the network side device may be received, and the network side device is notified through the above reply information. Otherwise, the terminal notifies, through the above reply message, the network side device of the incapability of receiving the downlink data packets by the terminal. The foregoing energy consumption information may enable that, in a case that the downlink data packets are to be transmitted without transitioning the states of the terminal, the downlink data packets must be transmitted under a condition that the power consumption of the terminal supports receiving the data packets, so as to avoid a case that the network side device transmits the downlink data packets to the terminal directly but the power consumption of the terminal cannot enable the terminal to receive the downlink data packets, thereby causing wasting resource overheads, and to achieve the effect of saving resource overheads.

The foregoing measurement information may be information obtained by the terminal through measurement. For example, the terminal performs measurement on a network to obtain measurement information indicating a condition of the network. In a case that the measurement information indicates that the network condition is good, the terminal may determine that data packets may be received without transitioning the states of the terminal, and the downlink data packets transmitted by the network side device may be received, and the network side device is notified by using the reply information. Otherwise, the network side device is notified that the downlink data packets cannot be received by the terminal. The foregoing measurement information may enable the network side device to transmit downlink data packets when a current condition of a network is good, so as to avoid a case that the network side device directly transmits the downlink data packets to the terminal but the condition of the network cannot enable the terminal to receive the downlink data packets, thereby causing wasting resource overheads, and to achieve the effect of saving resource overheads.

It should be noted that the reply information is not limited to be used to make a reply when the data transmission indication indicates the transmission, and may also be used to make a reply when the data transmission indication indicates the non-transmission. For example, in a case that the data transmission indication indicates the non-transmission and state transition is needed, the user terminal may reply to the network side device that the state transition is needed, or reply that the state transition is not needed and the downlink data packets may be transmitted directly.

It should be noted that, in the embodiments of the present disclosure, the step 202 is optional, that is, the step 202 may also be not performed. For example, after the network side device transmits the paging message, the network side device may directly transmit the downlink data packets through resource locations agreed between the terminal and the network side device in advance, or may directly broadcast the downlink data packets. A manner in which the downlink packets are transmitted is not limited in the embodiments of the present disclosure.

Step 203: receiving the downlink data packets transmitted by the network side device in a case that the data transmission indication indicating the transmission exists in the paging message.

When the terminal recognizes that the data transmission indication indicates the transmission, the terminal may receive the downlink data packets transmitted by the network side device. It should be noted that the receiving of the downlink data packets transmitted by the network side device may be understood as: performing an operation of receiving the downlink data packets, and the downlink data packets may be successfully received, or may not be successfully received after the operation is performed. That is, in step 202, the downlink data packets may be successfully received, or may not be successfully received.

Optionally, in a case that a random access preamble exists in the paging message, the data transmission indication indicating the transmission exists in the paging message; or the paging message includes a data transmission indication, and the data transmission indication is used to indicate to transmission or non-transmission.

In the embodiments, by adding the random access preamble, such as a random access preamble sequence, to the paging message, that is, as long as the random access preamble exists in the paging message, the transmission is indicated in the paging message, i.e., the downlink data packets are transmitted without transitioning the states of the terminal. Otherwise, in a case that no random access preamble exists, the non-transmission is indicated in the paging message, that is, no downlink data packet is transmitted without transitioning the states. A cost of the paging message may be reduced by the random access preamble to save network resources. Therefore, in a case that the non-transmission is indicated in the paging message, additional information is not needed to be added to the paging message.

In the embodiments, the data transmission indication may be added to the paging message, and indication contents of the data transmission indication may be the transmission or the non-transmission. For example, the transmission or the non-transmission may be indicated by using 1 bit, such as '1' is used to indicate the transmission, '0' is used to indicate the non-transmission.

Optionally, the paging message may further carry an air-interface identifier.

The air-interface identifier may be used to decode the downlink data packets transmitted by the network side device, or the air-interface identifier may be used to decode a message through which the network side device transmits the downlink data packets. The air-interface identifier may be allocated to the terminal by the network side device. The air-interface identifier may be used to decode the downlink data packets by the terminal effectively or to decode the message including the downlink data packets by the terminal, and may prevent other terminals from acquiring the downlink data packets transmitted by the network side device, so as to improve security of transmitting the downlink data packets.

Optionally, the step of receiving the downlink data packets transmitted by the network side device includes: receiving a 'Message 2' (Msg2) of a random access procedure transmitted by the network side device. The Message 2 includes a downlink scheduling indication (a DL grant) and the downlink data packets; decoding the Message 2 according to the air-interface identifier, and acquiring the downlink scheduling indication; determining time-frequency domain locations indicated by the downlink scheduling indication; receiving, at the time-frequency domain locations, the downlink data packets transmitted by the network side device.

In the embodiments, the Message 2 includes the downlink scheduling indication and the downlink data packets, so that the terminal may receive, at the time-frequency domain locations indicated by the downlink scheduling indication, the downlink data packets transmitted by the network side device, and thus there is no need to additionally add a scheduling message, thereby reducing an overhead of system signaling. It should be noted that, in the embodiments, in a case that the step 202 is not performed, a same technical effect may be implemented. For example, in the embodiments of the present disclosure, the transmitting the Message 1 of the random access procedure to the network side device does not include the foregoing step of transmitting the reply information. Of course, in some scenarios, it is also possible that the terminal does not transmit the Message 1 of the random access procedure to the network side device.

Optionally, the downlink scheduling indication is used to indicate multiple resources, and the network side device repeatedly transmits downlink data packets at time-frequency domain locations corresponding to the multiple resources; or the downlink scheduling indication is used to indicate multiple resources, and the network side device transmits multiple Redundancy Versions (RVs) of the same downlink data packet at time-frequency domain locations corresponding to the multiple resources; or the downlink scheduling indication is used to indicate a resource, and the network side device transmits the downlink data packets at a time-frequency domain location corresponding to the resource.

In the embodiments, the downlink scheduling indication (the DL grant) may be configured to allocate multiple resources, and the network side device repeatedly transmits the downlink data packets at the time-frequency domain locations corresponding to the multiple resources, so that a successful rate of receiving the downlink data packets by the terminal may be improved. The DL grant may be configured to allocate multiple resources, and the network side device transmits multiple Redundancy Versions (RVs) of the same downlink data packet at the time-frequency domain locations corresponding to the multiple resources, wherein the multiple Redundancy Versions (RVs) may be the same or different redundancy versions of the same data packet, in which way, the successful rate of receiving downlink data packets by the terminal may be increased. In the embodiments, the downlink scheduling indication may also be configured to allocate a resource, and the network side device transmits the downlink data packets at the time-frequency domain location corresponding to the resource; the case may be realized when the time-frequency domain resources are not enough. That is, the network side device may reasonably schedule resources to transmit downlink data packets by using the foregoing downlink scheduling indication according to the condition of the network, so as to achieve an effect that the network resource is reasonably utilized.

Optionally, the Message 2 further includes at least one of: an uplink scheduling indication of a Message 3 (Msg3) of the random access procedure, an uplink timing used for a uplink synchronization, or a signaling used for the uplink power control.

In the embodiments, the foregoing Message 2 may be used to transmit to the terminal an uplink scheduling indication (a UL grant) of the Message 3 of the random access procedure, an uplink timing (TA) used for the uplink synchronization, and the signaling (P) used for the uplink power control, so that in a case that the terminal needs to perform the transmission of the Message 3, and/or in a case that the uplink synchronization needs to be performed, or when the uplink power control needs to be performed, no additional signaling is needed so as to save the signaling overheads.

Optionally, the receiving the downlink data packets transmitted by the network side device includes: successfully receiving the downlink data packets transmitted by the network side device; or failing to receive the downlink data packets transmitted by the network side device.

In the embodiments, it possibly exist that at the time of receiving the downlink data packets by the terminal, there may be a case in which the reception succeeds or the reception fails.

Optionally, after the receiving the downlink data packets transmitted by the network side device, the method further includes: in a case that the downlink data packets transmitted by the network side device are successfully received, stopping receiving the downlink data packets and/or establishing an air-interface signaling connection; receiving a downlink scheduling indication re-allocated by the network side device in a case that the downlink data packets transmitted by the network side device are not successfully received, and receiving, according to the downlink scheduling indication, the downlink data packets re-transmitted by the network side device; or in a case that the downlink data packets transmitted by the network side device are not successfully received, transmitting the Message 3 of the random access procedure to the network side device, wherein the Message 3 is used to request to enter a connected state by the terminal.

In the embodiments, in a case that the downlink data packets transmitted by the network side device are successfully received, the terminal may stop receiving the downlink data packets and/or establishing the air-interface signaling connection, wherein it is also possible that no air-interface signaling is established herein because the downlink data packets have been successfully received.

In addition, in the embodiments, in a case that the reception is not successful, the downlink scheduling indication re-allocated by the network side device may be received so as to receive the downlink data packets again and so as to increase the successful rate of receiving the downlink data packets. Optionally, under a condition that the reception is failed, the Message 3 may be transmitted to enter the connected state, such as a RRC connected state. After entering the connected state, the terminal may receive the downlink data packets so as to avoid a possibility that the terminal cannot receive the downlink data packets. Here, the re-reception under a situation that the downlink packets are not successfully received, and the request to enter the connected state may be performed based on a contention-based random access. In a case that the downlink data packets are not successfully received, the network side device may be notified by means of a NACK message or in other manners, which is not limited in the embodiments of the present disclosure.

Optionally, the paging message may further carry the random access preamble index, and the Message 1 in the random access procedure carries a random access preamble corresponding to the random access preamble index.

In the embodiments, a non-contention-based random access procedure may be applied. The random access preamble index may be an index of random access preambles in a preamble group B, for example, a preamble index (group-B). Of course, the preamble group B may also be replaced by a preamble group A or another preamble group, which is not limited thereto in the present disclosure. The Message 1 may also carry random access preambles corresponding to the random access preamble index, so that the network side device receives the Message 1 transmitted by the terminal, and further transmits the downlink data packets. In the embodiments, since the downlink data packets are transmitted between the network side device and the terminal in a non-contention manner, the successful rate of transmitting the downlink data packets may be improved. It should be noted that, in the embodiments, in the case that the step 202 is not performed, the same technical effect is achievable, that is, the Message 1 of the random access procedure is transmitted by the terminal to the network side device, and does not include the reply information. In addition, in the embodiments, in a case that the terminal fails to receive the downlink data packets, the state transition of the terminal may not be performed.

Optionally, the data transmission indication is an indication indicating whether the network side device needs to transmit downlink data packets or not and being determined by the network side device according to service feature information of the downlink data packets; or the data transmission indication is an indication indicating whether the network side device needs to transmit downlink data packets or not and being determined by the network side device according to the service feature information of the downlink data packets and network side information acquired by the network side device; or the data transmission indication is a data transmission indication transmitted by the core network and received by the network side device; or the data transmission indication is an indication obtained by the network side device through modifying a data transmission indication transmitted by the core network.

In the embodiments, the foregoing data transmission indications may be determined by the network side device or the core network, and may be determined according to the service feature information of the downlink data packets or according to the service feature information and the network side information. For example, in a case that the service feature information indicates that the downlink data packets are allowed to be transmitted without a need for the state transition, the data transmission indication may be determined to be a data transmission indication indicating transmission of data packets, and in a case that the service feature information indicates that the downlink data packets are allowed to be transmitted with the need for the state transition, the data transmission indication is a data transmission indication indicating non-transmission of data packets; or in a case that the network side information indicates that the downlink data packets are currently allowed to be transmitted without the need for the state transition, the data transmission indication may be determined to be a data transmission indication indicating transmission of the data packets; and in a case that the network side information indicates that the downlink data packets are allowed to be transmitted with the need for the state transition, and the data transmission indication may be determined to be a data transmission indication indicating non-transmission of data packets. In the embodiments, since the data transmission indication is determined according to the service feature information, or according to the service feature information and the network side information, it may be prevented that a waste of transmission resources is caused by transmitting, to the terminal without the state transition of the terminal, data being only allowed to be transmitted with the need for the state transition, thereby saving the transmission resources. Moreover, since the foregoing data transmission indication may be determined according to the network side information, an effect of optimizing the network environment may be achieved. For example, when the network is congested, the downlink data packets may be transmitted without the the state transition of the terminal, thereby reducing network congestion.

Optionally, the network side information includes at least one of a network side load status or operator configuration data.

The network side load status may include a load condition of the network side device and/or a load condition of the core network, and the operator configuration data includes whether the operator is configured to support data transmission without a state transition of a terminal. In the embodiments, since the foregoing data transmission indication is determined based on at least one of the network side load status or the operator configuration data, it may be ensured that transmitting downlink data packets without the state transition may more easily be supported by the network side so as to improve the successful rate of transmitting downlink data packets.

Optionally, the foregoing service feature information includes at least one of a service type, service cache information, a service quality requirement of a service, a service priority, or subscription information of the terminal.

The service type may include at least one of a smart water meter service, a Vehicle to Everything service, or an eMBB service. The service cache information may be a quantity of a user uplink data cache, for example, a specific cache quantity (such as XX bit); the foregoing service quality requirement of a service may be a QoS parameter (which may also be called a user data QoS feature), such as a data packet loss rate, a maximum allowable delay, a forwarding priority, an allocation reservation priority (ARP), bit rate rules (such as a maximum allowed bit rate, etc.).

In the embodiments, the data transmission indication may be determined according to the foregoing service feature information, so that the downlink data packets transmitted without the state transition are downlink data packets transmitted without the need for the state transition and under a support of the service feature information, so as to improve the successful rate of transmitting the downlink data packets. For example, in a case that the delay required for the downlink data packets is low, or the quantity of the user uplink data cache is low, it may be determined that data transmission without the state transition is supported, that is, the data transmission indication is determined to indicate the transmission. In a case that the required delay is high and the quantity of the user uplink data cache is high, it may be determined that data transmission without the state transition is not supported, that is, the data transmission indication is determined to indicate the non-transmission. A determination rule for determining based on the service feature information whether data transmission without the state transition is supported or not is not enumerated herein one by one.

Optionally, the service cache information is represented by a cache quantity or by a cache level; the service quality requirement is represented by a service quality parameter feature, or is represented by numbers used for numbering groups of service quality parameter features, or is represented by a packet loss rate and the maximum allowable delay.

The service cache information may be represented by a cache quantity (such as N bit) or a cache level (high, medium, low, or level numbers corresponding to amounts of data to be transmitted (for example, 1 to 100 bits are numbered as group 1, and a group number 1 is used at this time); and the service quality requirements may be represented by the service quality parameter features (such as low/high latency, small/large packets) or by numbers used for numbering groups of the service quality parameters (such as QCI serial numbers). Since the service quality parameter features use numbers for numbering the groups, signaling overhead may be saved because there is no need for numbering each parameter.

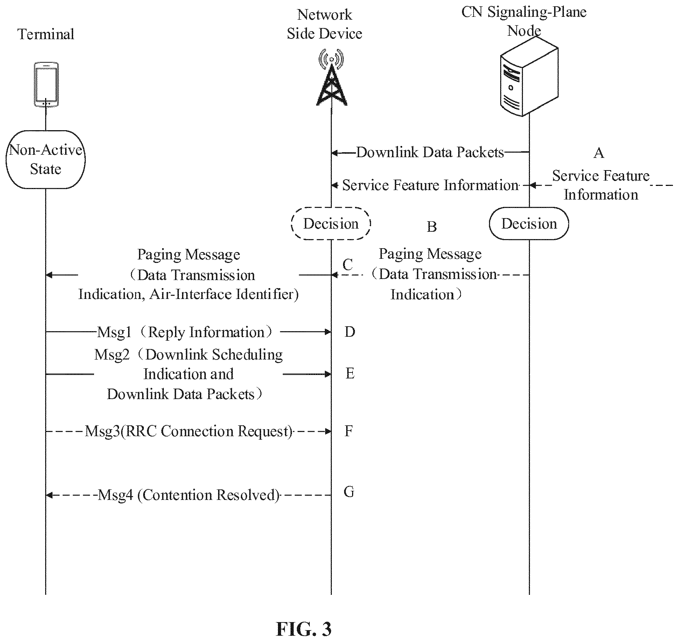

For embodiments in which the network side device or the core network determines the foregoing data transmitting indication, an example is described as follows. The example is illustrated by using a contention-based random access procedure. As shown in Fig. 3, the following steps A-G are included.

Step A: the downlink data packets arrive at the network side device.

The service feature information of the downlink data packets may be forwarded by a core network data plane node to a core network signaling plane node, or may be obtained by the network side device directly from packet headers of the downlink data packets, that is, the packet headers of the downlink data packets include the service feature information.

Step B: makes a decision. The decision may be a decision of the data transmission indication. The decision may include two cases. One of the two cases is that the core network signaling plane node (such as a MME) determines whether to transition states of a terminal according to the service feature information and the network side information. The other of the two cases is that the base station determines whether to transition the states based on the service feature information and the network side information.

Step C: transmitting a Paging message.

There are two cases in which the Paging message is transmitted.

A first case: the core network signaling plane node may initiate a Paging signaling, wherein the signaling includes the data transmission indication, and the paging signaling may be transmitted to the network side device by using a S1 signaling. The network side device transmits the paging signaling to the UE through the air-interface message, and the network side device may assign the air-interface identifier allocated to the terminal.

The network side device may modify the data transmission indication. For example, in a case that the MME transmits the Paging message to the network side device, the network side device may determine whether the data transmission indication is modified in the Paging message transmitted by the network side device to the terminal or not, according to a situation of the network side device, such as a load on the network side device, or whether the network side device supports transmitting downlink data packets without the state transition, the modification herein may be modifying the data transmission indication from the transmission to the non-transmission, or modifying the data transmission indication from the non-transmission to the transmission. In a case that no modification is made, the data transmission indication in the paging message transmitted by the core network is directly transmitted to the terminal.

The second case: the network side device transmits a paging message to the terminal, and the message may include the data transmission indication and the air-interface identifier, wherein the data transmission indication is determined and generated by the network side device.

Step D: the terminal transmits the Msg1 to the network side device.

The step may be the reply message transmitted to the network side device in response to the data transmission indication after the terminal receives the data transmission indication, the terminal may determine, according to a situation of the terminal (such as whether the terminal supports the capability of receiving data packets without the state transition), whether to perform an operation indicated by the data transmission indication or not. For example, in a case that 1-bit information bit is included in the Msg1, then "1" indicates that the state transition is performed, and "0" indicates that state transition is not performed, or a specific preamble group is used to identify whether to perform the state transition or not.

Step E: the network side device transmits the Msg2 to the terminal.

The Msg2 may include a DL grant, a UL grant for transmitting a Msg3, and downlink data packets transmitted from network side device to the terminal. Of course, the Msg2 may also include other signaling in an original random access procedure, such as TA, P, UL grant, and the like.

After the terminal receives the Msg2, the terminal may decode the DL grant and the downlink data packets by using the air-interface identifier for the terminal.

The DL grant may arrange multiple resources to repeatedly transmit the downlink data packets; or may transmit different redundancy versions of the same data packet (i.e., re-transmission) in multiple resources.

Step F: the terminal transmits the Msg3 to the network side device.

It should be noted that in a case that the terminal successfully receives the downlink data packets after the step E, the terminal may not transmit messages after the Msg3, that is, the terminal may stop receiving data.

In a case that the terminal fails to receive the data packets, the network side device may re-allocate scheduling resources, or the terminal may transmit an initial RRC message in the Msg3, request to enter the RRC-connected state, and subsequent processes for the terminal is the same as those in a Long Term Evolution (LTE), which is not described in detail herein.

Step G:the network side device solves competition, and replies a Msg 4 to the terminal.

The example shown in Fig. 3 may achieve transmission of the downlink data packets in the contention-based random access procedure, and may achieve transmission of the downlink data packets without the need for state transition, so as to reduce a transmission delay of the downlink data packets. In addition, in a case that the terminal fails to receive the downlink data packets without the state transition, the state of the terminal may be transitioned, or the downlink data packets transmitted by the network side device may be received again so as to improve a successful rate of receiving the downlink data packets.

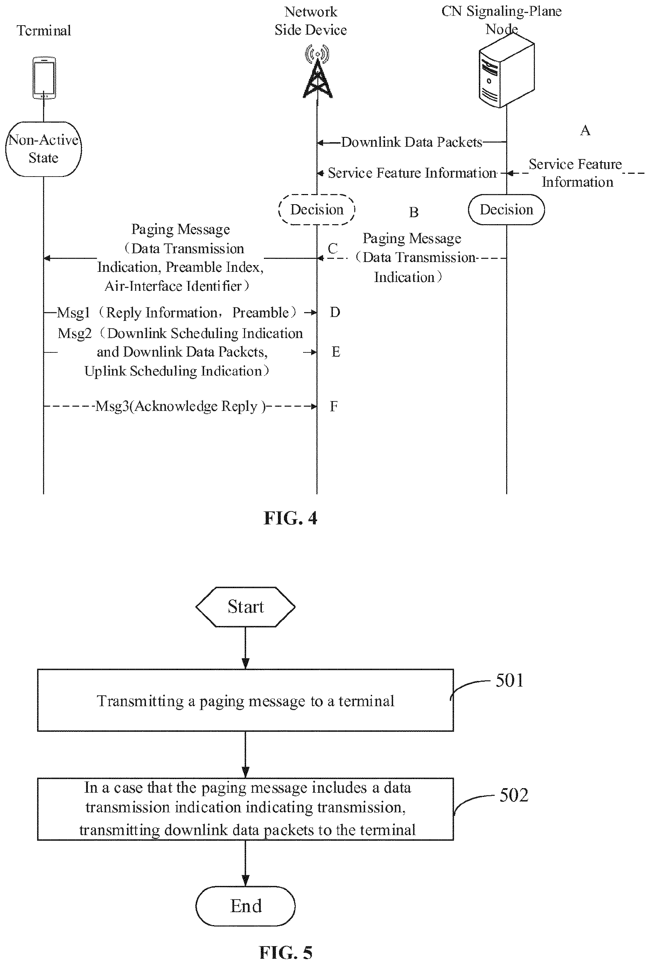

The embodiments described above in which the network side device or the core network determines the data transmission indication are illustrated below as an example. The example is illustrated by way of a non-contention-based random access procedure. As shown in Fig. 4, the following steps A-F are included in the example.

Step A: the downlink data packets arrive at the network side device.

The service feature information of the downlink data packets may be forwarded by a core network data plane to a core network signaling plane node, or may be obtained by the network side device directly from the packet headers of the downlink data packets, that is, the packet headers of the downlink data packets include the service feature information.

Step B: make a decision, and the decision may be a decision for the data transmission indication. The decision may include two cases. One of the two cases is that the core network signaling plane node (such as the MME) determines whether to transition a state of a terminal according to service feature information and network side information. The other of the two cases is that the base station determines whether to transition the state of the terminal based on the service feature information and the network side information.

Step C: transmitting a Paging message.

The Paging message may be transmitted under two conditions.

The first condition: the core network signaling plane node may initiate a Paging signaling, wherein the Paging signaling includes a data transmission indication, and the Paging signaling may be transmitted to the network side device by using a S1 signaling. The network side device transmits the Paging signaling to the UE through the air-interface message, and the network side device may need to have the air-interface identifier allocated to the terminal.

The network side device may modify the data transmission indication. For example, in a case that the MME transmits the Paging message to the network side device, the network side device may, according to a situation of the network side device, such as a load on the network side device or whether the network side device supports transmitting downlink data packets without the state transition of the terminal, determine whether to modify the data transmission indication in the Paging message transmitted by the network side device to the terminal, wherein the modification here may be to modify the data transmission indication from indicating the transmission to the non-transmission, or to modify the data transmission indication from indicating the non-transmission to the transmission. In a case that no modification is made to the data transmission indication, the data transmission indication in the Paging message transmitted by the core network is directly transmitted to the terminal.

The second case: the network side device transmits a Paging message to the terminal, wherein the Paging message may include a data transmission indication and an air-interface identifier, wherein the data transmission indication is determined and generated by the network side device.

It should be noted that the Paging message transmitted by the network side device to the terminal further includes a non-contention based preamble index (group-B).

Step D: the terminal transmits the Msg1 to the network side device.

In the step, the Msg1 may be the reply message for replying the data transmission indication after the terminal receives the data transmission indication transmitted from the network side device, the terminal may also decide whether to perform an operation indicated by the data transmission indication operation according to a situation of the terminal (such as whether the terminal supports the capability of receiving data packets without state transition of the terminal). For example, in a case that 1-bit information bit is included in the Msg1 and is used for indicating the state transition, '1' indicates that the state transition is performed, '0' indicates that the state transition is not performed, or a specific preamble group is used to identify whether to perform the state transition or not.

It should be noted that the Msg1 also includes a preamble (group-B), and the above reply information may also be embodied in an explicit manner or in an implicit manner.

Step E: the network side device transmits the Msg2 to the terminal.

The Msg2 may include a DL grant, a UL grant for transmitting the Msg3, and downlink data packets transmitted to the terminal by the network side device.

After the terminal receives the Msg2, the terminal may use the identifier of the terminal to distinguish data and scheduling signaling transmitted to the terminal itself. Here, the downlink scheduling information may be a single scheduling; or the downlink scheduling information may also schedule multiple downlink resources at a time, so that the terminal receives data packets at multiple DL resources, or receives multiple Redundancy Versions (RVs) of the same data packet (multiple Redundancy Versions (RVs) may be the same or different redundancy versions).

Step F: the terminal transmits the Msg3 to the network side device.

The Msg3 is an acknowledgement message to indicate that the terminal receives the downlink data packets. For example, after the terminal has received the downlink data packets and successfully decodes the downlink data packets, the terminal replies confirmation information to the network side device and completes the procedure.

The example shown in Fig. 4 may achieve transmission of the downlink data packets in the non-contention-based random access procedure, and may achieve the transmission of the downlink data packets without the station transition of the terminal, so as to reduce a transmission delay of the downlink data packets.

Optionally, after the step of receiving the Paging message transmitted by the network side device, the method further includes: in a case that the data transmission indication indicates the non-transmission, transmitting a Message 1 (Msg1) of the random access procedure to the network side device for requesting to enter the connected state.

In the embodiments, in a case that the data transmission indication indicates the non-transmission, the Message 1 of the random access procedure may be transmitted to the network side device to request to enter the connected state, that is, in a case that the data transmission indication indicates the non-transmission, the terminal performs the state transition. In the embodiments, the state transition may be performed only in the case that the data transmission indication indicates the non-transmission. In this way, system signaling overhead may be reduced and a delay of transmitting the downlink data packets may be reduced, and power consumptions of the terminal and network side device may be saved. the case that the data transmission indication indicates the non-transmission may also be understood that the paging message does not include the data transmission indication indicating the transmission, that is, in a case that the data transmission indication indicating the transmission is not included in the Paging message, the terminal transmits to the network side device the Message 1 of the random access procedure for requesting to enter the connected state.

In the method for transmitting the downlink data packets of the embodiments of the present disclosure, the Paging message transmitted by the network side device may be received; the Message 1 of the random access procedure is generated; and the reply information corresponding to the data transmission indication is transmitted to the network side device by using the Message 1 of the random access procedure. The network side device performs the transmission of the downlink data packets according to the reply information; and in a case that the paging message includes the data transmission indication indicating the transmission, the downlink data packets transmitted by the network side device are received. In this way, after the paging message is transmitted, the downlink data packets may be directly transmitted, so that, after the paging message is received, the RRC connection is not needed to be established in the related art to transmit the downlink data packets, thereby reducing the delay of transmitting the downlink data packets. Because the terminal replies the above reply information to the network side device, the network side device may negotiate with the terminal by means of the above reply information, when the downlink data packets are transmitted between the network side device and the terminal, so that the resource overhead caused under a condition that the downlink data packets are transmitted by the network device directly to the terminal and the terminal cannot be received is avoided, thereby saving network resources.

Referring to Fig. 5, Fig. 5 is a flowchart of a method for transmitting downlink data packets according to some non-claimed embodiments of the present disclosure. The method illustrated in Figure 5 includes the following steps 501-502.

Step 501: transmitting a Paging message to the terminal.

The Paging message may be a paging message transmitted by the network side device to the terminal in response to receiving the downlink data packets for the terminal. Further, the network side device may further receive a paging message transmitted by the core network, and the paging message indicates that the core network receives the downlink data packets for the terminal, and the core network is to transmit the downlink data packets to the network side device.

Further, the step 501 is further configured to receive the paging message transmitted by the network side device before the air-interface signaling connection is established. The air-interface signaling may be an end-to-end data transmission signaling protocol, for example, a related air-interface signaling includes a RRC signaling.

Step 502: in a case that the paging message includes a data transmission indication indicating a transmission, transmitting downlink data packets to the terminal.

In embodiments of the present disclosure, the data transmission indication may indicate two cases: transmission and non-transmission. Details of the two cases may be obtained by referring to related descriptions of the embodiments shown in Fig. 1 and the embodiments shown in Fig. 2, and are not described herein.

In a case that the paging message includes the data transmission indication indicating the transmission, the network side device may transmit the downlink data packets to the terminal, so that the terminal does not need to perform the state transition, thereby reducing a delay of transmitting the downlink data packets, and reducing the energy consumptions of the network side device and the terminal, and reducing the overhead of network signaling.

In embodiments of the present disclosure, the foregoing method may be applied to the network side device in the embodiments shown in Fig. 1 and the embodiments shown in Fig. 2, wherein the descriptions of the network side device and the terminal may be referred to the embodiments shown in Fig.1 and the embodiments shown in Fig. 2 and are not repeated.

In the method for transmitting the downlink data packets of the embodiments of the present disclosure, the paging message is transmitted to the terminal, and in a case that the paging message includes the data transmission indication indicating the transmission, the downlink data packets are transmitted to the terminal. In this way, in a case that the paging message is transmitted, the downlink data packets may be directly transmitted, so that after the paging message is received, the RRC connection is not needed to be established in the related art to transmit the downlink data packets, thereby reducing the delay of transmitting the downlink data packets.

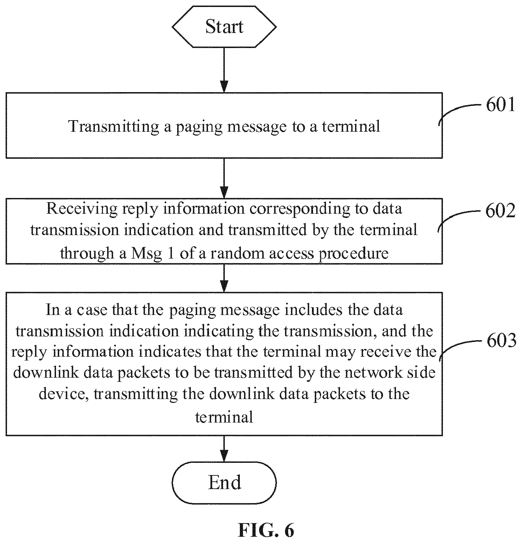

Referring to Fig. 6, Fig. 6 is a flowchart of a method for transmitting downlink data packets according to some non-claimed embodiments of the present disclosure. The method illustrated in Figure 6 includes the following steps 601-603.

Step 601: transmitting a paging message to the terminal.

Optionally, in a case that the paging message includes a random access preamble, the paging message includes the data transmission indication indicating the transmission; or

The paging message includes the data transmission indication, and the data transmission indication is used to indicate the transmission or the non-transmission.

Descriptions of the paging message and the foregoing data transmission indication may be obtained by referring to corresponding descriptions of the above embodiments, and details are not described herein.

Step 602: receiving reply information corresponding to the data transmission indication and transmitted by the terminal through the Message 1 of the random access procedure.

The foregoing reply information includes an identifier for indicating whether to receive the downlink data packets transmitted by the network side device; or the reply information includes a random access preamble sequence for indicating whether to receive the downlink data packets transmitted by the network side device.

Optionally, an identifier identifying whether to receive the downlink data packets transmitted by the network side device is added to the random access preamble sequence.

Description of the reply information may be obtained by referring to the embodiments shown in Fig. 1, in Fig. 2, and in Fig. 5, and details are not described herein.

Step 603: in a case that the paging message includes the data transmission indication indicating the transmission, and the reply information indicates that the terminal may receive the downlink data packets to be transmitted by the network side device, transmitting the downlink data packets to the terminal.

By means of the reply information, the network side device may negotiate with the terminal in a case that the downlink data packets is to be transmitted between the network side device and the terminal, that is, in a case that the reply information indicates that the terminal may receive the downlink data packets to be transmitted by the network side device, the network side device transmits the downlink data packets to the terminal, thus avoiding a waste of resource overhead caused under a condition that the downlink data packets are directly transmitted by the network side device to the terminal but the terminal cannot receive the downlink data packets.

It should be noted that description of the reply information in the step 602 may be obtained by referring to corresponding description in the embodiments shown in Fig. 2, and details thereof are not described herein. In a same way, the step 602 is also optional, that is, not implementing the step 602 is also feasible. For example, the step 603 may be: after the network side device transmits the paging message, and in a case that the data transmission indication indicates the transmission, transmitting the downlink data packets directly.

Optionally, the paging message further includes an air-interface identifier.

The air-interface identifier may be allocated for the terminal by the network side device, and the air-interface identifier is used for decoding downlink data packets or a message in which the downlink data packets are transmitted.

Optionally, the step of transmitting the downlink data packets to the terminal includes: transmitting the Message 2 of the random access procedure to the terminal, wherein the Message 2 includes a downlink scheduling indication and the downlink data packets.

The air-interface identifier may be allocated for the terminal by the network side device, and the air-interface identifier is used to decode the Message 2. In the embodiments, the Message 2 includes the downlink scheduling indication and the downlink data packets, so that the terminal may receive, at time-frequency domain locations indicated by the downlink scheduling indication, the downlink data packets transmitted by the network side device, and thus, there is no need to add additional scheduling messages, and an overhead of system signaling is reduced.

Optionally, the downlink scheduling indication is used to indicate multiple resources, and the network side device repeatedly transmits the downlink data packets at the time-frequency domain locations corresponding to the multiple resources; or the downlink scheduling indication is used to indicate multiple resources, and the network side device transmits multiple Redundancy Versions (RVs) of the same downlink data packet at the time-frequency domain locations corresponding to the multiple resources; or the downlink scheduling indication is used to indicate one resource, and the network side device transmits the downlink data packets at a time-frequency domain location corresponding to the one resource.

It should be noted that, descriptions of the air-interface identifier, the Message 2, and the downlink scheduling indication may be obtained by referring to corresponding descriptions of the embodiments shown in Fig. 2, and details thereof are not described herein.

Optionally, the Message 2 further includes at least one of an uplink scheduling indication in the Message 3 in the random access procedure, an uplink timing used for uplink synchronization, and a signaling used for uplink power controls.

It should be noted that, descriptions of the uplink scheduling indication of the Message 3 in the random access procedure, the uplink timing used for the uplink synchronization, and the signaling used for the uplink power control, may be obtained by referring to corresponding descriptions of the embodiments shown in Fig. 2, and details thereof are not described herein.

Optionally, after the step of transmitting the downlink data packets to the terminal, the method further includes: in a case that the terminal successfully receives the downlink data packets, stopping transmitting the downlink data packets and/or establishing an air-interface signaling connection; or in a case that the terminal fails to receive the downlink data packets, retransmitting the downlink scheduling indication and the downlink data packets to the terminal; or in a case that the terminal fails to receive the downlink data packets, receiving the Message 3 of the random access procedure transmitted by the terminal, and transmitting a Message 4 (Msg4) of the random access procedure to the terminal.

In the embodiments, in the case that the downlink data packets transmitted by the network side device are successfully received, the transmitting the downlink data packets and/or the establishing the air-interface signaling connection are stopped, wherein the air-interface signaling may not be established herein, because the downlink data packets have been successfully received.

In addition, in the embodiments, in the case that the downlink data packets are not successfully received, the downlink scheduling indication may be re-allocated the terminal to retransmit the downlink data packets to the terminal, so as to increase a successful rate of receiving the downlink data packets. Optionally, in a case that the downlink data packets are not successfully received, the terminal may enter the connected state, for example, a RRC_connected state, through the Message 3 and the Message 4, and the terminal may receive the downlink data packets after the terminal enters the connected state, so as to avoid a case that the terminal may not receive the downlink data packets. Here, re-reception of the downlink data packets due to failing to receive the downlink data packets, and a request to enter the connected state may be performed based on a contention-based random access procedure. In the case that the downlink data packets are not successfully received, the terminal may notify the network side device by means of a NACK message or in other ways, and the ways in which the network side device are notified are not limited in the embodiments of the present disclosure.

Optionally, the paging message may further include a random access preamble index, and the Message 1 of the random access procedure includes random access preambles corresponding to the random access preamble index.

In the embodiments, the downlink data packets may be transmitted in the case that the terminal does not transition the state of the terminal in the non-contention-based random access procedure, so as to reduce the delay of transmitting the downlink data packets.

Optionally, before the transmitting the paging message to the terminal, the method further includes: determining, according to the service feature information of the downlink data packets, whether the downlink data packets need to be transmitted to the terminal or not, and generating, according to a result of the determination, the data transmission indication; or determining, according to the service feature information of the downlink data packets and the network side information, whether the downlink data packets need to be transmitted to the terminal or not, and generating the data transmission indication according to the result of the determination.

In the embodiments, the network side device may determine the data transmission indication according to the service feature information or according to the service feature information and the network side information. In this way, the waste of transmission resources caused for a reason that data packets only allowed to be transmitted with a need for the station transition are transmitted to the terminal without the state transition of the terminal, thereby saving transmission resources. Moreover, since the above data transmission indication may be determined according to the network side information, an effect of optimizing a network environment may be achieved.

Optionally, the network side information includes at least one of a network-side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement of a service is represented by a service quality parameter feature, or is represented by numbers used for numbering service quality parameter features, or is represented by a packet loss rate and a maximum allowable delay.

Optionally, the service feature information is obtained from packet headers of the downlink data packets transmitted by the core network; or the service feature information is transmitted by the core network by using a signaling.

It should be noted that descriptions of the service feature information and the network side information may be obtained by referring to the embodiments shown in Fig. 2, and details thereof are not described herein.

Optionally, the step of transmitting a paging message to the terminal includes: transparently transmitting to the terminal the paging message transmitted by the core network, wherein, the data transmission indication is an indication determined by the core network according to the service feature information of the downlink data packets and indicating whether the data needs to be transmitted or not; or the data transmission indication is an indication determined by the core network according to the service feature information of the downlink data packets and the network side information and indicating whether the data needs to be transmitted or not.

In the embodiments, the network side device may transparently transmit to the terminal the paging message transmitted by the core network, wherein, the network side device may add an air-interface identifier assigned to the terminal in the paging message. In the embodiments, since the terminal does not need to determine whether the downlink data packets may be transmitted without the state transition, and the data transmission indication does not need to be generated, thus the energy consumption of the network side device may be saved.

Optionally, before the step of transmitting the paging message to the terminal, the method further includes: receiving the paging message transmitted by the core network, and determining, according to device parameters of the network side device being read, whether to modify the data transmission indication carried in the paging message or not. The step of transmitting the paging message to the terminal includes: in a case that the data transmission indication carried in the paging message is determined not to be modified, transparently transmitting to the terminal the paging message transmitted by the core network; in a case that it is determined to modify the data transmission indication carried in the paging message, modifying the data transmission indication carried in the paging message transmitted by the core network, and transmitting the paging message carrying the modified data transmission indication to the terminal.

In the embodiments, the device parameters being read may be load information of the network side device or capability information indicating whether the network side device supports transmitting downlink data packets without the state transition or not, so as to determine whether to modify the data transmission indication transmitted by the core network or not by using the device parameters. The modification herein may be to modify the data transmission indication from the transmission to the non-transmission, or to modify the data transmission indication from the non-transmission to the transmission. In a case that no modification is made, the data transmission indication in the paging message transmitted by the core network is transparently transmitted to the terminal.

In the embodiments, since the network side device determines whether to modify the data transmission indication transmitted by the core network or not according to the read device parameters, the data transmission indication transmitted to the terminal is determined by the network side device according to actual conditions of the network side device, thereby avoiding the case in which the data transmission indication transmitted to the terminal indicates the transmission under a condition that the network side device does not support transmitting the downlink data packets with the state transition due to the actual conditions of the network side device, preventing unnecessary operations from brought to the terminal, and avoiding wasting resources of the terminal.

Optionally, after the step of transmitting the paging message to the terminal, the method further includes: in a case that the data transmission indication indicates the non-transmission, receiving a Msg1 of a random access procedure for requesting to enter a connected state transmitted by the terminal.

In the embodiments, in the case that the data transmission indication indicates the non-transmission, the terminal may transmit the Msg1 of the random access procedure to the network side device to request to enter the connected state, that is, in a case that the data transmission indication indicates the non-transmission, the terminal performs the state transition to enter the connected state. In the embodiments, the state transition may be performed only when the data transmission indication indicates the non-transmission. In this way, a system signaling overhead may be reduced and a delay of transmitting the downlink data packet may be lowered, and power consumption of the terminal and the network side device may be saved.

In the method for transmitting downlink data packets of the embodiments of the present disclosure, the paging message is transmitted to the terminal; and the reply information responsive to the data transmission indication and transmitted by the terminal through the Msg1 of the random access procedure is received; in the case that the data transmission indication indicating the transmission exists in the paging message and the reply information indicates that the terminal may receive the downlink data packets transmitted by the network side device, the downlink data packets are transmitted to the terminal. In this way, after the paging message is transmitted, the downlink data packets may be directly transmitted, so that a case in the related art that the downlink data packets may not be transmitted until an RRC connection is established after the paging message is received may not be needed, thereby reducing the delay of transmitting the downlink data packets. Because the terminal transmits the above reply information to the network side device, the network side device may negotiate with the terminal by means of the above reply information when the downlink data packets are to be transmitted between the network side device and the terminal, thereby preventing a case from happening in which the network side device directly transmits the downlink data packets to the terminal, but the terminal cannot receive the downlink data packets, causing waste of a resource overhead.

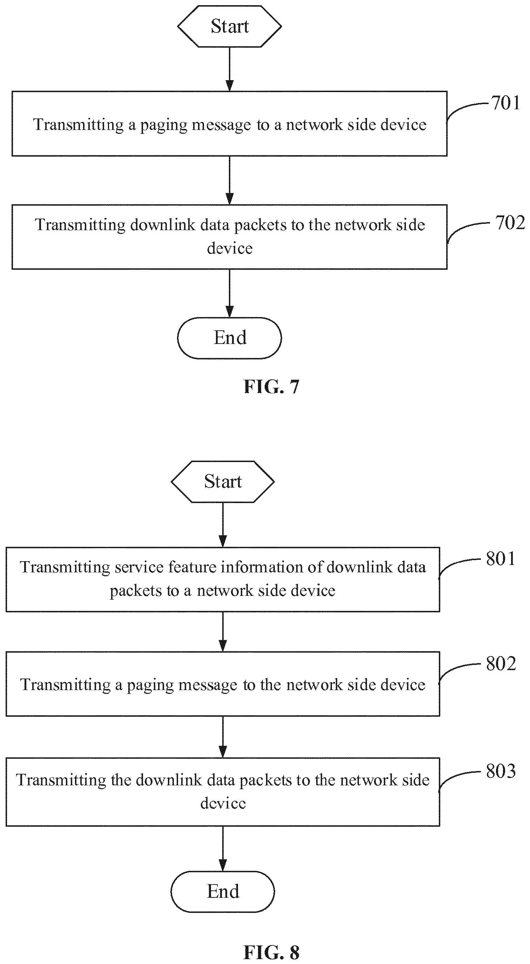

Referring to Fig. 7, Fig. 7 is a flowchart of a method for transmitting downlink data packets according to some non-claimed embodiments of the present disclosure. The method shown in Fig. 7 includes following steps 701-702.

Step 701: transmitting a paging message to the network side device, wherein the paging message is used to indicate whether to transmit downlink data packets to the terminal or not.

The paging message may be a message in a paging procedure initiated by the core network device after the core network receives the downlink data packets of the terminal, and the paging procedure may be initiated in a list of a Tracking Area (TA List) in which the terminal is located. The paging message may be received by network side devices in all TA lists by using a S1 signaling, and then the network side devices may initiate the paging procedure within ranges of the network side devices, for example, paging related to a RRC. In the embodiments of the present disclosure, the paging message transmitted by the network side device to the terminal may be understood as a paging message related to the RRC. The foregoing indication of transmitting the downlink data packets to the terminal may be an indication indicating whether to transmit the downlink data packets to the terminal without the state transition or not.

Step 702: transmitting the downlink data packets to the network side device, so that the network side device transmits the downlink data packets to the terminal according to the paging message.

After the paging message is transmitted, the core network device may transmit the downlink data packets to the network side device, and after the network side device receives the downlink data packets, the network side device may transmit the downlink data packets as described in the embodiments shown in Fig. 1, Fig. 2, Fig. 5, and t Fig. 6.

Optionally, the foregoing method may be applied to a core network signaling plane node, or a core network control plane node, for example, a mobility management entity MME.

In the method for transmitting downlink data packets of the embodiments of the present disclosure, the paging message is transmitted to the network side device, the paging message is used to indicate whether to transmit the downlink data packets to the terminal or not; the downlink data packets are transmitted to the network side device, so that the network side device transmits the downlink data packets to the terminal according to the paging message. In this way, the network side device may directly transmit the downlink data packets to the user terminal according to the foregoing paging message, so that the case in the related art in which the downlink data packets may not be transmitted until an RRC connection is established after the paging message is received is not needed, and thus the delay of transmitting the downlink data packets may be reduced.

Referring to Fig. 8, Fig. 8 is a flowchart of a method for transmitting downlink data packets according to some non-claimed embodiments of the present disclosure. The method illustrated in Fig. 8 includes following steps 801-803.

Step 801: transmitting service feature information of downlink data packets to a network side device.

The service feature information is transmitted by using packet headers of the downlink data packets, or the service feature information is transmitted by using a signaling.

Details about transmitting the foregoing service feature information by the core network device to the network side device may be obtained by referring to relevant descriptions of the embodiments shown in Fig. 1, the embodiment shown in Fig. 2, the embodiment shown in Fig. 5, and the embodiment shown in Fig. 6, and thus are not described herein. It should be noted that step 801 is optional.

Through the service feature information, the network side device may determine whether the downlink data packets are to be transmitted to the terminal without the state transition or not, under a condition that the core network does not determine whether to transmit the downlink data packets to the terminal without the state transition or not, thereby improving a flexibility of transmitting the downlink data packets.

Step 802: transmitting a paging message to the network side device, wherein the paging message is used to indicate whether to transmit the downlink data packets to the terminal or not.

The paging message may be a message transmitted after the core network receives the downlink data packets of the terminal and initiates a paging procedure, and after a paging in the List (TA List) of the Tracking Area in which the terminal is located is initiated. The paging message may be received by network side devices in all TA lists by using the S1 signaling, and then the network side devices may initiate the paging message within ranges of the network side devices, for example, the paging related to the RRC. In the embodiments of the present disclosure, the paging message transmitted by the network side device to the terminal may be understood as a paging message related the RRC. The indication of transmitting the downlink data packets to the terminal may be an indication indicating whether to transmit the downlink data packets to the terminal without the state transition or not.

Step 803: transmitting the downlink data packets to the network side device, so that the network side device transmits the downlink data packets to the terminal according to the paging message.

Optionally, in a case that a random access preamble exists in the paging message, a data transmission indication indicating the transmission exists in the paging message; or the paging message includes a data transmission indication, wherein the data transmission indication is used to indicate the transmission or the non-transmission.

Description of the paging message and the data transmission indication may be obtained by referring to related descriptions in the embodiment shown in Fig. 1, the embodiment shown in Fig. 2, the embodiment shown in Fig. 5, and the embodiment shown in Fig. 6, and details are not described herein.

Optionally, before the step of transmitting the paging message to the network side device, the method further includes: determining, according to the service feature information of the downlink data packets, whether the network side device needs to transmit the downlink data packets to the terminal or not, and generating, according to a result of the determination, the data transmission indication; or determining, according to the service feature information of the downlink data packets and the network side information, whether the network side device needs to transmit the downlinking data packet to the terminal or not, and generating the data transmission indication according to the result of the determination.

Description of the determination above may be obtained by referring related descriptions in the embodiment shown in Fig. 1, the embodiment shown in Fig. 2, the embodiment shown in Fig. 5, and the embodiment shown in Fig. 6, details are not described herein.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of the service quality parameter features, or represented by a packet loss rate and the maximum allowable delay.

Description of the service feature information may be obtained by referring to related descriptions in the embodiment shown in Fig. 1, the embodiment shown in Fig. 2, the embodiment shown in Fig. 5, and the embodiment shown in Fig.6, details are not described herein.

In the method for transmitting downlink data packets of the embodiments of the present disclosure, the service feature information of downlink data packets is transmitted to the network side device, and the paging message is transmitted to the network side device, wherein the paging message is used to indicate whether to transmit the downlink data packets to the terminal or not; and the downlink data packets are transmitted to the network side device, so that the network side device transmits the downlink data packets to the terminal according to the paging message. In this way, the network side device may directly transmit the downlink data packets to the user terminal according to the foregoing paging message, and the case in the related art in which the downlink data packets may not be transmitted until a RRC connection is established after a paging message is received may not be needed, and the delay of transmitting the downlink data packets may be reduced. In addition, through the service feature information, the network side device may determine, according to the service feature information, whether to transmit the downlink data packets to the terminal without the state transition or not, under a condition that the core network does not determine whether to transmit the downlink data packets to the terminal without the state transition or not, thereby increasing flexibility of transmitting the downlink data packets.

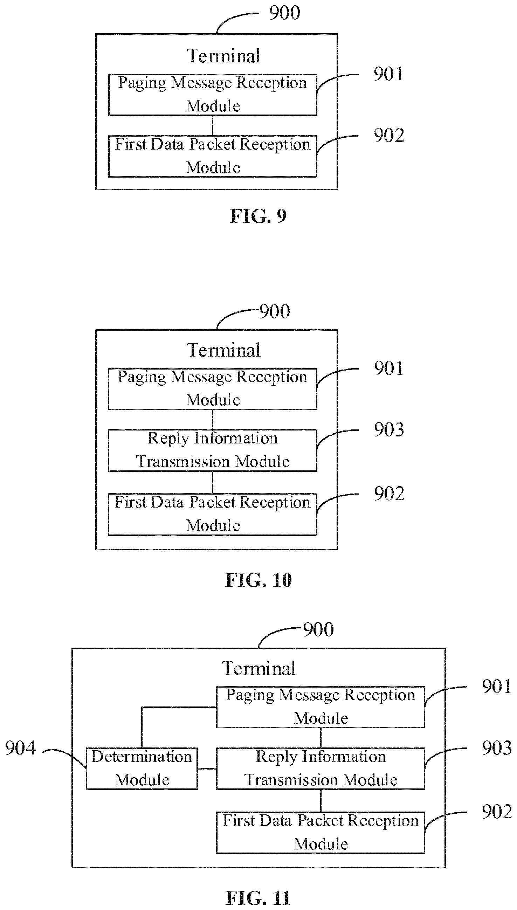

Referring to Fig. 9, Fig. 9 is a structural diagram of a terminal provided by some embodiments of the present disclosure. The terminal shown in Fig. 9 may implement details of the method for transmitting downlink data packets in the embodiment shown in Fig. 1 and the embodiment shown in Fig. 2, and achieve the same effect. As shown in Fig. 9, the terminal 900 includes: a paging message reception module 901 and a first data packet reception module 902, and the paging message reception module 901 is connected to the first data packet reception module 902. The paging message reception module 901 is configured to receive a paging message transmitted by the network side device. The first data packet reception module 902 is configured to receive downlink data packets transmitted by the network side device, in a case that a data transmission indication indicating a transmission exists in the paging message received by the paging message reception module 901.

Optionally, as shown in Fig. 10, the terminal 900 further includes: a reply information transmission module 903 configured to generate a message 1 of a random access procedure according to the paging message, and transmit, to the network side device by using the message 1 of the random access procedure, the reply information corresponding to the data transmission indication.

Optionally, as shown in Fig. 11, the terminal 900 further includes: a determination module 904 configured to determine, according to parameters of the terminal, whether to receive the downlink data packets transmitted by the network side device or not; wherein the reply information is used to indicate whether to receive the downlink data packets transmitted by the network side device or not.

Optionally, the determination module 904 is configured to determine, according to UE capability information of the terminal, whether to receive the downlink data packets transmitted by the network side device or not, or the determination module 904 is configured to determine, according to energy consumption information of the terminal, whether to receive the downlink data packets transmitted by the network side device or not, or the determination module 904 is configured to determine, according to measurement information of the terminal, whether to receive the downlink data packets transmitted by the network side device or not.

The reply information includes an identifier for indicating whether to receive the downlink data packets transmitted by the network side device or not; or the reply information includes a random access preamble sequence for indicating whether to receive the downlink data packets transmitted by the network side device or not.

Optionally, an identifier bit for indicating whether to receive the downlink data packets transmitted by the network side device or not is added to the random access preamble sequence.

Optionally, in a case that a random access preamble exists in the paging message, the data transmission indication indicating the transmission exists in the paging message; or the paging message includes the data transmission indication, and the data transmission indication is used to indicate the transmission or a non-transmission.

Optionally, the paging message further carries an air-interface identifier.

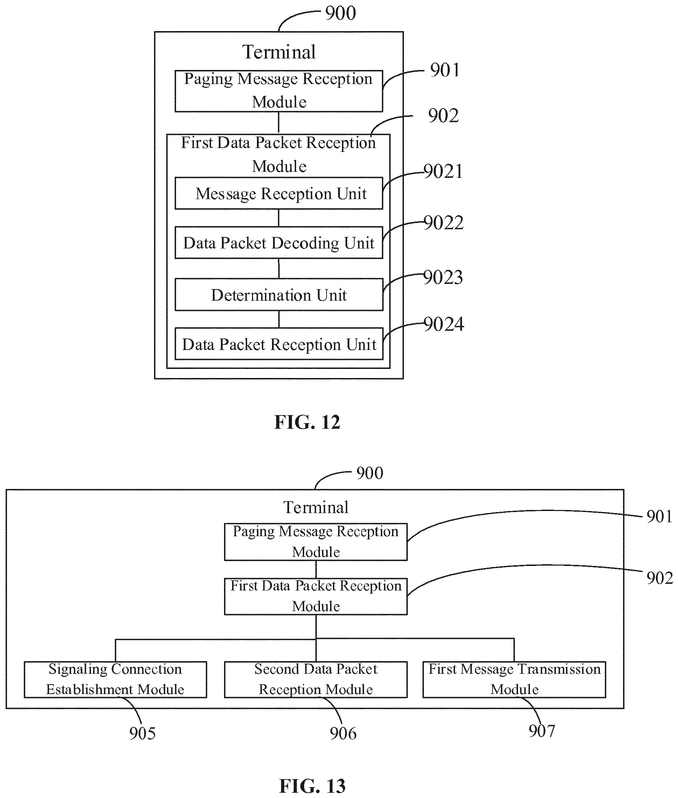

Optionally, as shown in Fig. 12, the first data packet reception module 902 includes: a message reception unit 9021, configured to receive a message 2 of the random access procedure transmitted by the network side device when the data transmission indication indicating the transmission exists in the paging message, and the message 2 includes a downlink scheduling indication and the downlink data packets; a data packet decoding unit 9022, configured to decode the message 2 according to the air-interface identifier and obtain the downlink scheduling indication; a determination unit 9023, configured to determine a time-frequency domain location indicated by the downlink scheduling indication; and, a data packet reception unit 9024 configured to receive, at the time-frequency domain location, the downlink data packets transmitted by the network side device.

Optionally, the downlink scheduling indication is used to indicate multiple resources, and the network side device repeatedly transmits the downlink data packets at time-frequency domain locations corresponding to the multiple resources; or the downlink scheduling indication is used to indicate multiple resources, and the network side device transmits multiple Redundancy Versions (RVs) of a same downlink data packet in the time-frequency domain locations corresponding to the multiple resources; or the downlink scheduling indication is used to indicate a resource, and the network side device transmits the downlink data packets at a time-frequency domain location corresponding to the resource.

Optionally, the message 2 further includes at least one of an uplink scheduling indication of the message 3 in the random access procedure, an uplink timing used for uplink synchronization, or signaling used for uplink power control.

Optionally, as shown in Fig. 13, the terminal 900 further includes: a signaling connection establishment module 905 configured to stop receiving the downlink data packets and/or establishing an air-interface signaling connection in a case that the downlink data packets transmitted by the network side device are successfully received; a second data packet reception module 906 configured to receive a downlink scheduling indication re-allocated by the network side device in a case that the downlink data packets transmitted by the network side device are not successfully received; or a first message transmission module 907 configured to transmit a message 3 of the random access procedure to the network side device in a case that the downlink data packets transmitted by the network side device are not successfully received, wherein the message 3 is used to request to enter a connected state.

Optionally, the paging message further carries a random access preamble index, and the message 1 in the random access process carries a random access preamble corresponding to the random access preamble index.

Optionally, the data transmission indication is an indication determined according to service feature information of the downlink data packets by the network side device and indicating whether data needs to be transmitted or not, or the data transmission indication is an indication determined by the network side device according to the service feature information of the downlink data packets and according to network side information obtained by the network side device and indicating whether the data needs to be transmitted or not; or the data transmission indication is a data transmission indication transmitted by the core network and received by the network side device; or the data transmission indication is an indication obtained after the network side device modifies the data transmission indication transmitted by the core network.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features , or represented by a packet loss rate and a maximum allowable delay.

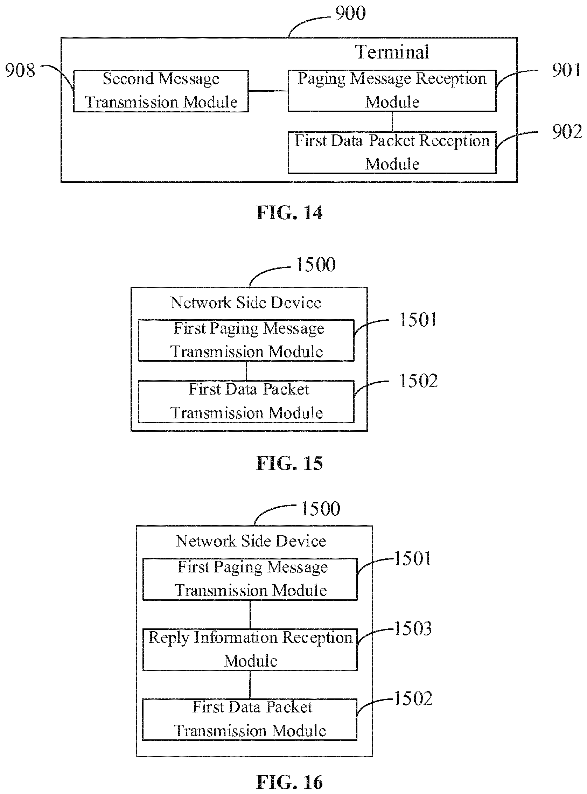

Optionally, as shown in Fig. 14, the terminal 900 further includes: a second message transmission module 908, configured to transmit a message 1 of a random access procedure to the network side device for requesting to enter the connected state in a case that the data transmission indication indicates the non-transmission.

The terminal in this embodiment of the present disclosure receives the paging message transmitted by the network side device; in a case that the data transmission indication indicating the transmission exists in the paging message received by the paging message reception module, the terminal receives the downlink data packets transmitted by the network side device. In this way, in a case that the paging message is received, the downlink data packets may be directly transmitted, so that the case in the related art in which downlink data packets may not be transmitted until an RRC connection is established after the paging message is received may not be needed, thereby reducing a delay of transmitting the downlink data packets.

Referring to Fig. 15, Fig. 15 is a structural diagram of a network side device provided by some non-claimed embodiments of the present disclosure. The network side device may implement details of data transmission methods in the embodiment shown in Fig. 5 and the embodiment shown in Fig. 6, and achieve the same effect. As shown in Fig. 15, the network side device 1500 includes: a first paging message transmission module 1501 and a first data packet transmission module 1502, and the first paging message transmission module 1501 is connected to the first data packet transmission module 1502. The first paging message transmission module 1501 is configured to transmit a paging message to a terminal. The first data packet transmission module 1502 is configured to: in a case that a data transmission indication indicating the transmission exists in the paging message transmitted by the first paging message transmission module 1501, transmit the downlink data packets to the terminal.

Optionally, as shown in Fig. 16, the network side device 1500 further includes: a reply information reception module 1503, configured to receive reply information corresponding to the data transmission indication and transmitted by the terminal through the message 1 of the random access procedure.

The first data packet transmission module 1502 is configured to: in a case that the data transmission indication indicating the transmission exists in the paging message and the reply information indicates that the terminal is capable of receive the downlink data packets transmitted by the network side device, transmit the downlink data packets to the terminal.

The reply information includes an identifier for indicating whether to receive the downlink data packets transmitted by the network side device or not; or the reply information includes a random access preamble sequence for indicating whether to receive the downlink data packets transmitted by the network side device or not.

Optionally, an identifier bit for indicating whether to receive the downlink data packets transmitted by the network side device is added to the random access preamble sequence.

Optionally, in a case that a random access preamble exists in the paging message, the data transmission indication indicating the transmission exists in the paging message; or the paging message includes the data transmission indication, and the data transmission indication is used to indicate the transmission or the non-transmission.

Optionally, the paging message further carries an air-interface identifier.

Optionally, the first data packet transmission module 1502 is configured to transmit a message 2 of the random access procedure to the terminal in a case that the data transmission indication indicating the transmission exists in the paging message, wherein the message 2 includes a downlink scheduling indication and the downlink data packets.

Optionally, the downlink scheduling indication is used to indicate multiple resources, and the network side device repeatedly transmits the downlink data packets in time-frequency domain locations corresponding to the multiple resources; or the downlink scheduling indication is used to indicate multiple resources, and the network side device transmits multiple Redundancy Versions (RVs) of a same downlink data packet in time-frequency domain locations corresponding to the multiple resources; or the downlink scheduling indication is used to indicate a resource, and the network side device transmits the downlink data packets at a time-frequency domain location corresponding to the resource.

Optionally, the message 2 further includes at least one of an uplink scheduling indication of the message 3 in the random access procedure, an uplink timing used for the uplink synchronization, or a signaling used for the uplink power control.

Optionally, the step of transmitting the downlink data packets to the terminal, includes: a case in which the downlink data packets are successfully received by the terminal, and a case in which the downlink data packets are not successfully received by the terminal.

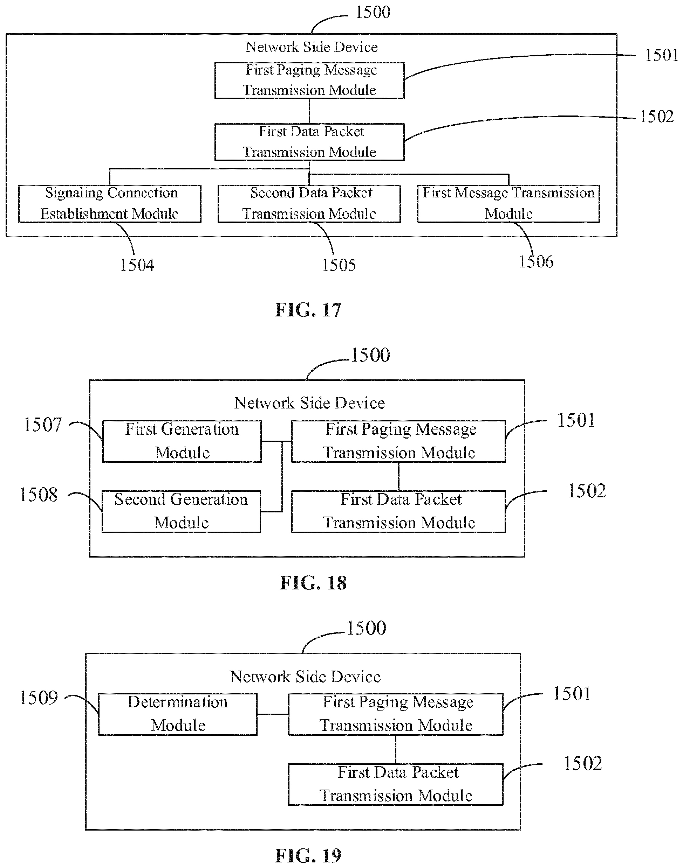

Optionally, as shown in Fig. 17, the network side device 1500 further includes: a signaling connection establishment module 1504 configured to stop transmitting the downlink data packets and/or establishing an air-interface connection in a case that the terminal successfully receives the downlink data packets a signaling connection; or a second data packet transmission module 1505 configured to: in a case that the terminal fails to receive the downlink data packets, retransmit the downlink scheduling indication and the downlink data packets to the terminal; or a first message transmission module 1506 configured to: in a case that the terminal fails to receive the downlink data packets, receive a message 3 of the random access procedure transmitted by the terminal, and transmit a message 4 of the random access procedure to the terminal.

Optionally, the paging message further carries a random access preamble index, and the message 1 carries a random access preamble corresponding to the random access preamble index.

Optionally, as shown in Fig. 18, the network side device 1500 further includes: a first generation module 1507 configured to determine, according to service feature information of the downlink data packets, whether the downlink data packets need to be transmitted to the terminal or not, and configured to generate, according to a result of the determination, the data transmission indication; or a second generation module 1508 configured to determine, according to the service feature information of the downlink data packets and network side information, whether the downlink data packets need to be transmitted to the terminal or not, and configured to generate the data transmission indication according to a result of the determination.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features, or represented by a packet loss rate and a maximum allowable delay.

Optionally, the service feature information is obtained from packet headers of the downlink data packets transmitted by the core network; or the service feature information is transmitted by the core network through a signaling.

Optionally, the first paging message transmission module 1501 is configured to transparently transmit, to the terminal, the paging message transmitted by the core network, wherein, the data transmission indication is an indication determined by the core network according to the service feature information of the downlink data packets, and indicating whether data needs to be transmitted or not; or the data transmission indication is an indication determined by the core network according to the service feature information of the downlink data packets and the network side information, and indicating whether data needs to be transmitted or not.

Optionally, as shown in Fig. 19, the network side device 1500 further includes: a determination module 1509 configured to receive a paging message transmitted by the core network, and determine, according to a device parameter of the network side device being read, whether to modify the data transmission indication carried in the message paging or not.

The first paging message transmission module 1501 is configured to: in a case that the it is determined to not modify the data transmission indication carried in the paging message, transparently transmit to the terminal the paging message transmitted by the core network; or the first paging message transmission module 1501 is configured to: in a case that it is determined to modify the data transmission indication carried in the paging message, modify the data transmission indication carried in the paging message transmitted by the core network, and transmit the paging message carrying the modified data transmission indication to the terminal.

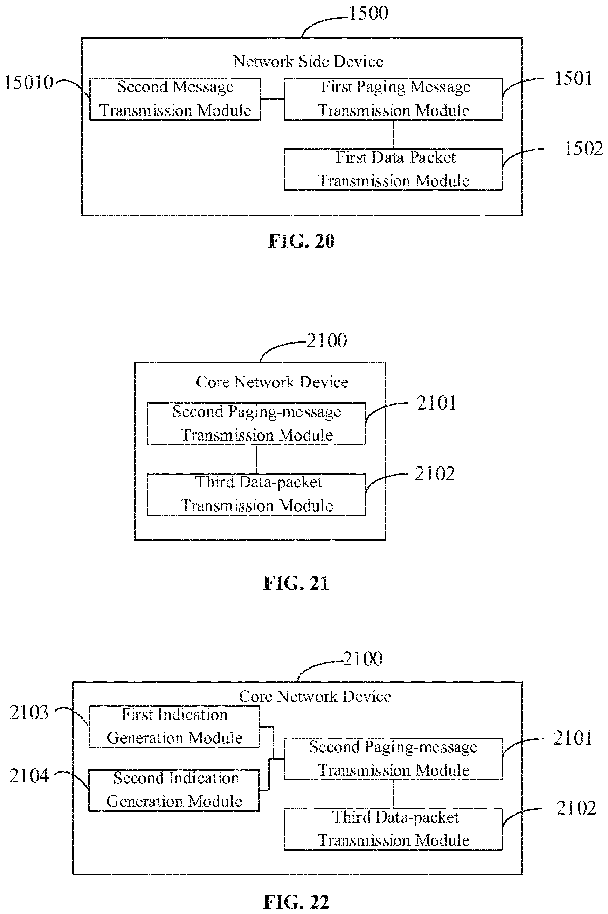

Optionally, as shown in Fig. 20, the network side device 1500 further includes: a second message transmission module 15010, configured to receive, in a case that the data transmission indication indicates the non-transmission, a message 1 of a random access procedure transmitted by the terminal for requesting to enter a connected state.

In the network side device provided by the embodiments of the present disclosure, the paging message is transmitted to the terminal; in a case that a data transmission indication indicating the transmission exists in the paging message, the downlink data packets are transmitted to the terminal. In this way, when the paging message is transmitted, the downlink data packets may be directly transmitted, so that the case in the related art in which the downlink data packets may not be transmitted until an RRC connection is established after the paging message is received may not be needed, thereby reducing a delay of transmitting the downlink data packets.

Referring to Fig. 21, Fig. 21 is a structural diagram of a core network device provided by some non-claimed embodiments of the present disclosure. The core network device may implement the details of the data transmission method in the embodiment shown in Fig. 7 and the embodiment shown in Fig. 8, and achieve the same effect. As shown in Fig. 21, the core network device 2100 includes a second paging-message transmission module 2101 and a third data-packet transmission module 2102. The second paging-message transmission module 2101 is connected to the third data-packet transmission module 2102. The second paging-message transmission module 2101 is configured to transmit a paging message to the network side device, wherein the paging message is used to indicate whether to transmit downlink data packets to a terminal or not.

The third data-packet transmission module 2102 is configured to transmit the downlink data packets to the network side device, so that the network side device may transmit the downlink data packets to the terminal according to the paging message.

Optionally, in a case that a random access preamble exists in the paging message, a data transmission indication indicating a transmission exists in the paging message; or the paging message includes a data transmission indication, wherein the data transmission indication is used to indicate the transmission or the non-transmission.

Optionally, as shown in Fig. 22, the core network device 2100 further includes: a first indication generation module 2103, configured to determine, according to service feature information of the downlink data packets, whether the network side device needs to transmit the downlink data packets to the terminal and generate, according to a result of the determination, the data transmission indication; or a second indication generation module 2104 configured to determine, according to the service feature information of the downlink data packets and network side information, whether the network side device needs to transmit the downlink data packets to the terminal or not, and generate the data transmission indication according to the result of the determination.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features, or represented by a packet loss rate and a maximum allowable delay.

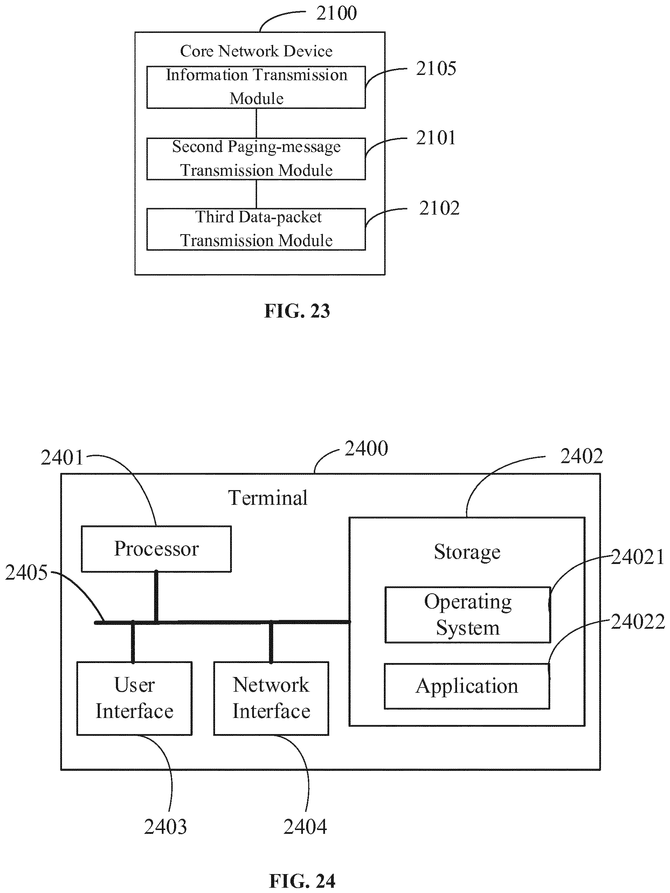

Optionally, as shown in Fig. 23, the core network device 2100 further includes: an information transmission module 2105, configured to transmit service feature information of the downlink data packets to the network side device, wherein the service feature information is transmitted through packet headers of the downlink data packets, or the service feature information is transmitted through a signaling.

In the core network device in some embodiments of the present disclosure, a paging message is transmitted to the network side device, and the paging message is used to indicate whether to transmit downlink data packets to the terminal or not; the downlink data packets are transmitted to the network side device, so that the network side device may transmit the downlink data packets to the terminal according to the paging message. In this way, the network side device may directly transmit the downlink data packets to the user terminal through using the foregoing paging message, so that the in case in the related art in which the downlink data packets may not be transmitted until an RRC connection is established after the paging message is received may not be need, thus reducing the delay of transmitting downlink data packets.

Referring to Fig. 24, Fig. 24 is a structural diagram of a terminal of the present disclosure. The terminal may implement details of the data transmission method in the embodiment shown in Fig. 1 and the embodiment shown in Fig. 2, and achieve the same effect. As shown in Fig. 24, the terminal 2400 includes at least one processor 2401, a storage 2402, at least one network interface 2404, and a user interface 2403. The above components in terminal 2400 are coupled together by a bus system 2405. It will be appreciated that the bus system 2405 is used to implement connection communication between these components. The bus system 2405 includes a data bus, a power bus, a control bus, and a status signal bus. However, for clarity of description, various buses are labeled as the bus system 2405 in Fig.24.

The user interface 2403 may include a display, a keyboard, or a pointing device (e.g., a mouse, a track ball, a touch pad, or a touch screen, etc.).

It may be understood that the storage 2402 in the embodiments of the present disclosure may be a volatile storage or a non-volatile storage, or may include both a volatile storage and a non-volatile storage. The non-volatile storage may be a read-only memory (ROM), a programmable read only memory (PROM), an erasable programmable read only memory (Erasable PROM, EPROM), or an electrically erasable programmable read only memory (EEPROM) or a flash memory. The volatile storage may be a random access memory (RAM) which acts as an external cache. By way of example and not limitation, many forms of RAM are available, such as a static random access memory (SRAM), a dynamic random access memory (DRAM), a synchronous dynamic random access memory (Synchronous DRAM). SDRAM), a Double-Data-Rate Synchronous Dynamic Random Access Memory (DDRSDRAM), an Enhanced Synchronous Dynamic Random Access Memory (ESDRAM), a Synchronous Connection Dynamic Random Access Memory (SDRAM) and a Direct Rambus Random Access Memory (DRRAM). The storage 2402 of the systems and methods described herein is intended to include, without being limited to, these and any other suitable types of storage.

In some embodiments, storage 2402 stores following elements, executable modules or data structures, or a subset thereof, or an extended set thereof: an operating system 24021 and an application program 24022.

The operating system 24021 includes various system programs, such as a framework layer, a core library layer, a driver layer, and the like, for implementing various basic services and processing hardware-based tasks. The application program 24022 includes various applications, such as a media player (Media Player), a browser (Browser), etc., for implementing various application services. A program for implementing the method of the embodiments of the present disclosure may be included in the application program 24022.

In the embodiments of the present disclosure, the program or the instruction stored in the storage 2402 may be a program or an instruction stored in the application program 24022. The processor 2401 is configured to: receive, through the network interface 2404, the paging message transmitted by the network side device, and receiving, through the network interface 2404, downlink data packets transmitted by the network side device in a case that a data transmission indication indicating the transmission exists in the paging message.

The method disclosed in the above embodiments of the present disclosure may be applied to the processor 2401 or implemented by the processor 2401. The processor 2401 may be an integrated circuit chip with signal processing capabilities. In an implementation process, each step of the foregoing method may be implemented by an integrated logic circuit in hardware in the processor 2401 or by an instruction in a form of software. The processor 2401 may be a general-purpose processor, a digital signal processor (DSP), an application specific integrated circuit (ASIC), a field programmable gate array (FPGA), or other programming logic devices, discrete gates or transistor logic devices, discrete hardware components. The methods, steps, and logical block diagrams disclosed in the embodiments of the present disclosure may be implemented or carried out. The general-purpose processor may be a microprocessor or any conventional processor or the like. Steps of the method disclosed in connection with the embodiments of the present disclosure may be directly implemented by a hardware decoding processor, or may be performed by a combination of hardware and software modules in a decoding processor. The software modules may be located in a known storage medium such as a random access memory, a flash memory, a read only memory, a programmable read only memory or an electrically erasable programmable memory, registers, and the like. The storage medium is located in the storage 2402, and the processor 2401 reads information in the storage 2402 and completes the steps of the above method in combination with hardware.

It will be appreciated that the embodiments described herein may be implemented in hardware, software, firmware, middleware, microcode, or a combination thereof. For hardware implementation, a processing unit may be implemented in one or more Application Specific Integrated Circuits (ASICs), Digital Signal Processors (DSP), Digital Signal Processing Devices (DSP Device, DSPD), Programmable Logic Devices (PLDs), Field-Programmable Gate Array (FPGA), general-purpose processors, controllers, microcontrollers, microprocessors, other electronic units for performing functions described herein, or a combination thereof.

For software implementation, techniques described herein may be implemented by modules (e.g., processes, functions, and so on) that perform the functions described herein. Software codes may be stored in a storage and executed by a processor. The storage may be implemented in the processor or external to the processor.

Optionally, the processor 2401 is further configured to: generate a message 1 of a random access procedure according to the paging message, and transmit reply information corresponding to the data transmission indication to the network side device by using the network interface 2404 and the message 1 of the random access procedure; wherein the network side device transmits the downlink data packets according to the reply information.

Optionally, the processor 2401 is further configured to: determine, according to parameters of the terminal, whether to receive the downlink data packets transmitted by the network side device or not, wherein the reply information is used to indicate whether to receive the downlink data packets transmitted by the network side device or not.

Optionally, the processor 2401 is further configured to: determine, according to UE capability information of the terminal, whether to receive the downlink data packets transmitted by the network side device or not; or determine, according to energy consumption information of the terminal, whether to receive the downlink data packets transmitted by the network side device or not; or determining, according to measurement information of the terminal, whether to receive the downlink data packets transmitted by the network side device or not.

The reply information includes an identifier for indicating whether to receive the downlink data packets transmitted by the network side device or not, or the reply information includes a random access preamble sequence for indicating whether to receive the downlink data packets transmitted by the network side device or not.

Optionally, an identifier bit for indicating whether the downlink data packets transmitted by the network side device are to be received is added to the random access preamble sequence.

Optionally, in a case that a random access preamble exists in the paging message, a data transmission indication indicating the transmission exists in the paging message; or the paging message includes a data transmission indication, and the data transmission indication is used to indicate the transmission or the non-transmission.

Optionally, the paging message further carries an air-interface identifier.

Optionally, the processor 2401 is further configured to: receive, through the network interface 2404, the message 2 of the random access procedure transmitted by the network side device, wherein the message 2 includes a downlink scheduling indication and downlink data packets; and decode the message 2 according to the air-interface identifier, and acquire the downlink scheduling indication; and determine time-frequency domain locations indicated by the downlink scheduling indication; and receive, at the time-frequency domain locations, the downlink data packets transmitted by the network side device.

Optionally, the downlink scheduling indication is used to indicate multiple resources, and the network side device repeatedly transmits the downlink data packets in time-frequency domain locations corresponding to the multiple resources; or the downlink scheduling indication is used to indicate multiple resources, and the network side device transmits multiple Redundancy Versions (RVs) of a same downlink data packet at time-frequency domain locations corresponding to the multiple resources; or the downlink scheduling indication is used to indicate one resource, and the network side device transmits the downlink data packets at a time-frequency domain location corresponding to the resource.

Optionally, the message 2 further includes at least one of an uplink scheduling indication of the message 3 in the random access procedure, an uplink timing used for the uplink synchronization, or a signaling used for the uplink power control.

Optionally, the processor 2401 is further configured to: successfully receive the downlink data packets transmitted by the network side device; or fail to receive the downlink data packets transmitted by the network side device.

Optionally, the processor 2401 is further configured to: in a case that the downlink data packets transmitted by the network side device are successfully received, stop receiving the downlink data packets and/or establishing an air-interface signaling connection; in a case that the downlink data packets transmitted by the network side device are not successfully received, receive through the network interface 2404 the downlink scheduling indication re-allocated by the network side device, and receive, according to the downlink scheduling indication, the downlink data packets retransmitted by the network side device; or in a case that the downlink data packets transmitted by the network side device are not successfully received, transmit a message 3 of the random access procedure to the network side device through the network interface 2404, wherein the message 3 is used to request to enter a connected state.

Optionally, the paging message further carries a random access preamble index, and the message 1 in the random access process carries the random access preamble corresponding to the random access preamble index.

Optionally, the data transmission indication is an indication determined by the network side device according to service feature information of the downlink data packets, and indicating whether data needs to be transmitted or not; or the data transmission indication is an indication determined by the network side device according to the service feature information of the downlink data packets and network side information obtained by the network side device, and indicating whether data needs to be transmitted or not; or the data transmission indication is an indication transmitted by the core network and received by the network side device; or the data transmission indication is an indication obtained by the network side device after the network side device modifies the data transmission indication transmitted by the core network.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or is represented by numbers used for numbering groups of service quality parameter features, or is represented by a packet loss rate and a maximum allowable delay.

Optionally, the processor 2401 is further configured to: in a case that the data transmission indication indicates non-transmission, transmit, to the network side device through the network interface 2404, a message 1 of a random access procedure for requesting to enter the connected state.

In the embodiments of the present disclosure, the paging message transmitted by the network side device is received; in a case that the data transmission indication indicating the transmission exists in the paging message, the downlink data packets transmitted by the network side device are received. In this way, in a case that the paging message is received, the downlink data packets may be directly transmitted, so that a case in the related art in which downlink data packets may not be transmitted until an RRC connection is established after the paging message is received may not be needed, thereby reducing a delay of transmitting the downlink data packets.

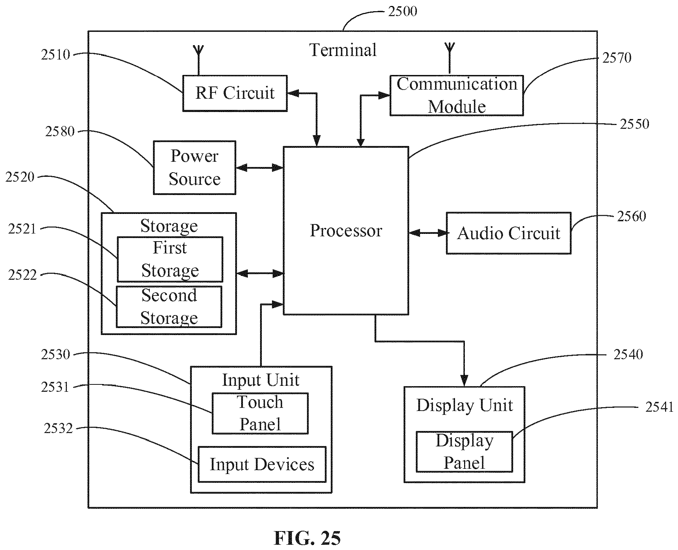

Referring to Fig. 25, Fig. 25 is a structural diagram of a terminal of the present disclosure. The terminal may implement details of the data transmission method in the embodiment shown in Fig. 1 and the embodiment shown in Fig. 2, and achieve the same effect. As shown in Fig. 25, the terminal 2500 includes a radio frequency (RF) circuit 2510, a storage 2520, an input unit 2530, a display unit 2540, a processor 2550, an audio circuit 2560, a communication module 2570, and a power source 2580.

The input unit 2530 may be configured to receive numeric or character information input by the user, and generate signal inputs related to user settings and function control of the terminal 2500. Specifically, in the embodiments of the present disclosure, the input unit 2530 may include a touch panel 2531. The touch panel 2531, also referred to as a touch screen, may collect touch operations made by a user on or near the touch panel (such as operations of the user using any suitable object or accessory such as a finger or a stylus on the touch panel 2531), and drive a corresponding connection device according to preset programmed programs. Optionally, the touch panel 2531 may include two parts: a touch detection device and a touch controller. The touch detection device detects a touch orientation of the user, and detects a signal brought by the touch operation, and transmits the signal to the touch controller; the touch controller receives the touch information from the touch detection device, converts the touch information into contact coordinates, and transmits the touch coordinate to the processor 2550 and may receive commands from the processor 2550 and execute the commands. Further, the touch panel 2531 may be implemented in various types such as a resistive type, a capacitive type, an infrared type, and a surface acoustic wave type. In addition to the touch panel 2531, the input unit 2530 may further include input devices 2532. The input devices 2532 may include, but are not limited to one or more of a physical keyboard, function keys (such as volume control buttons, switch buttons, etc.), trackballs, mice, joysticks, and the like.

The display unit 2540 may be used to display information input by the user or information provided to the user and various menu interfaces of the terminal 2500. The display unit 2540 may include a display panel 2541. Optionally, the display panel 2541 may be configured in a form of an LCD or an Organic Light-Emitting Diode (OLED).

It should be noted that the touch panel 2531 may cover the display panel 2541 to form a touch display screen. In a case that the touch display screen detects a touch operation on or near the touch display screen, the touch operation is transmitted to the processor 2550 to determine a type of a touch event, and then the processor 2550 provides a corresponding visual output on the touch display according to the type of the touch event.

The touch display includes an application interface display area and a common widget display area. An arrangement manner of the application interface display area and the common control display area is not limited, and the arrangement manner of the two display areas may be distinguished by a up-and-down arrangement, a left-and-right arrangement, or the like. The application interface display area may be used to display an interface of an application. Each interface may include interface elements such as at least one application icon and/or at least one widget desktop element. The application interface display area may also be an empty interface area that does not include any content. The common control display area is used to display controls used frequently, such as setting buttons, interface numbers, scroll bars, phone book icons, and the like.

The processor 2550 is a control center of the terminal 2500, and connects various parts of an entire mobile phone by using various interfaces and lines, and performs various functions and processing data of the terminal 2500 by running or executing software programs and/or modules stored in the first storage 2521, and invoking data stored in the second storage 2522, thereby performing an overall monitoring to the terminal 2500. Optionally, the processor 2550 may include one or more processing units.

In the embodiments of the present disclosure, by invoking software programs and/or modules stored in the first storage 2521 and/or the data in the second storage 2522, the processor 2550 is configured to: receive, through a communication module 2570, the paging message transmitted by the network side device; in a case that a data transmission indication indicating the transmission exists in the paging message, receive the downlink data packets transmitted by the network side device through the network interface 1904.

Optionally, the processor 2550 is further configured to: generate a message 1 of a random access procedure according to the paging message, and transmit reply information corresponding to the data transmission indication to the network side device through the communication module 2570 and the message 1 of the random access procedure, wherein the network side device transmits the downlink data packets according to the reply information.

Optionally, the processor 2550 is further configured to: determine, according to parameters of the terminal, whether to receive the downlink data packets transmitted by the network side device or not, wherein the reply information is used to indicate whether to receive the downlink data packets transmitted by the network side device or not.

Optionally, the processor 2550 is further configured to: determine, according to UE capability information of the terminal, whether to receive the downlink data packets transmitted by the network side device or not; or determine, according to energy consumption information or not, whether to receive the downlink data packets transmitted by the network side device or not; or determining, according to measurement information of the terminal, whether to receive the downlink data packets transmitted by the network side device or not.

The reply information includes an identifier for indicating whether to receive the downlink data packets transmitted by the network side device or not, or the reply information includes a random access preamble sequence for indicating whether to receive the downlink data packets transmitted by the network side device or not.

Optionally, an identifier bit for indicating whether to receive the downlink data packets transmitted by the network side device or not is added to the random access preamble sequence.

Optionally, in a case that a random access preamble exists in the paging message, a data transmission indication indicating the transmission exists in the paging message; or the paging message includes a data transmission indication, wherein the data transmission indication is used to indicate the transmission or the non-transmission.

Optionally, the paging message further carries an air-interface identifier.

Optionally, the processor 2550 is further configured to: receive, through the communication module 2570, a message 2 of the random access procedure transmitted by the network side device, wherein the message 2 includes a downlink scheduling indication and the downlink data packets; decode the message 2 according to the air-interface identifier, and acquire the downlink scheduling indication; determine time-frequency domain locations indicated by the downlink scheduling indication; and receive, at the time-frequency domain locations, the downlink data packets transmitted by the network side device.

Optionally, the downlink scheduling indication is used to indicate multiple resources, and the network side device repeatedly transmits downlink data packets at time-frequency domain locations corresponding to the multiple resources; or the downlink scheduling indication is used to indicate multiple resources, and the network side device transmits multiple Redundancy Versions (RVs) of a same downlink data packet at time-frequency domain locations corresponding to the multiple resources; or the downlink scheduling indication is used to indicate a resource, and the network side device transmits the downlink data packets at a time-frequency domain location corresponding to the resource.

Optionally, the message 2 further includes at least one of an uplink scheduling indication of the message 3 in the random access procedure, uplink timing used for uplink synchronization, or a signaling used for uplink power control.

Optionally, the processor 2550 is further configured to: in a case that the downlink data packets transmitted by the network side device are successfully received, stop receiving the downlink data packets and/or establishing an air-interface signaling connection; in a case that the downlink data packets transmitted by the network side device are not successfully received, receives, through the communication module 2570, the downlink scheduling indication re-allocated by the network side device, and receives according to the downlink scheduling indication the downlink data packets retransmitted by the network side device; or in a case that the downlink data packets transmitted by the network side device are not successfully received, transmit the message 3 of the random access procedure to the network side device through the communication module 2570, and the message 3 is used to request to enter a connected state.

Optionally, the paging message further carries a random access preamble index, and the message 1 in the random access process carries the random access preamble corresponding to the random access preamble index.

Optionally, the data transmission indication is an indication determined by the network side device according to service feature information of the downlink data packets and indicating whether the network side device needs to transmit downlink data packets or not; or the data transmission indication is an indication indicating whether the network side device needs to transmit the downlink data packets or not and being determined by the network side device according to the service feature information of the downlink data packets and network side information acquired by the network side device; or the data transmission indication is an indication transmitted by the core network and received by the network side device; or the data transmission indication is an indication obtained by the network side device through modifying a data transmission indication transmitted by the core network.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features, or represented by a packet loss rate and a maximum allowable delay.

Optionally, the processor 2550 is further configured to: transmit a message 1 of a random access procedure to the network side device for requesting to enter a connected state, in a case that the data transmission indication indicates the non-transmission.

In the embodiments of the present disclosure, the paging message transmitted by the network side device is received, and in a case that a data transmission indication indicating the transmission exists in the paging message, the downlink data packets transmitted by the network side device are received. In this way, in a case that the paging message is received, the downlink data packets may be directly transmitted, so that the case in the related art in which downlink data packets may not be transmitted until an RRC connection is established after the paging message is received may not be needed, thereby reducing a delay of transmitting the downlink data packets.

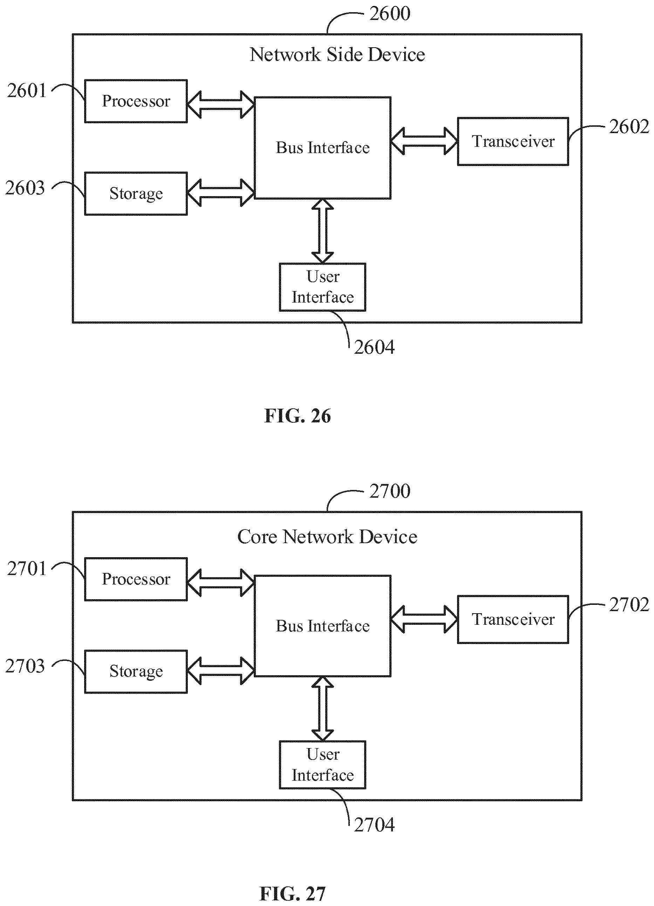

Referring to Fig. 26, Fig. 26 is a structural diagram of a network side device of the present disclosure. The network side device may implement details of data transmission methods in the embodiment shown in Fig. 5 and the embodiment shown in Fig. 6, and achieve the same effect.

As shown in Fig. 26, the network side device 2600 includes a processor 2601, a transceiver 2602, a storage 2603, a user interface 2604, and a bus interface. The processor 2601 is configured to read programs in the storage 2603 and perform following processes: transmitting the paging message to the terminal through the transceiver 2602; In a case that a data transmission indication indicating the transmission exists in the paging message, the downlink data packets are transmitted to the terminal through the transceiver 2062. The transceiver 2602 is configured to receive and transmit data under the control of the processor 2601.

In Fig. 26, a bus architecture may include any number of interconnected buses and bridges, specifically links one or more processors such as the processor 2601 and various circuits such as the storage 2603 together. The bus architecture may also link various other circuits such as peripheral devices, voltage regulators, and power management circuits, which are well known in the art and therefore will not be further described herein. The bus interface provides an interface. Transceiver 2602 may be a plurality of components, including a transmitter and a receiver, configured to provide means for communicating with various other devices through a transmission medium. For different user devices, the user interface 2604 may also be an interface capable of connecting external required devices, including but not limited to a keypad, a display, a speaker, a microphone, a joystick, and the like.

The processor 2601 is responsible for managing the bus architecture and usual processing transactions, and the storage 2603 may store data used by the processor 2601 when the processor 2601 performs operations.

Optionally, the processor 2601 is further configured to: receive, through the transceiver 1610, reply information corresponding to the data transmission indication and transmitted by the terminal through the message 1 of the random access procedure; in a case that a data transmission indication indicating the transmission exists in the paging message and the reply information indicates that the terminal may receive the downlink data packets transmitted by the network side device, transmit the downlink data packets to the terminal through the transceiver 1610.

The reply information includes an identifier for indicating whether to receive the downlink data packets transmitted by the network side device or not; or the reply information includes a random access preamble sequence for indicating whether to receive the downlink data packets transmitted by the network side device or not.

Optionally, an identifier bit for indicating whether to receive the downlink data packets transmitted by the network side device is added to the random access preamble sequence.

Optionally, in a case that a random access preamble exists in the paging message, the data transmission indication indicating the transmission exists in the paging message; or the paging message includes the data transmission indication, and the data transmission indication is used to indicate the transmission or the non-transmission.

Optionally, the paging message further carries an air-interface identifier.

Optionally, the processor 2601 is further configured to: transmit, through the transceiver 2602, the message 2 of the random access procedure to the terminal, wherein the message 2 includes a downlink scheduling indication and downlink data packets.

Optionally, the downlink scheduling indication is used to indicate multiple resources, and the network side device repeatedly transmits the downlink data packets in time-frequency domain locations corresponding to the multiple resources; or the downlink scheduling indication is used to indicate multiple resources, and the network side device transmits multiple Redundancy Versions (RVs) of a same downlink data packet in time-frequency domain locations corresponding to the multiple resources; or the downlink scheduling indication is used to indicate a resource, and the network side device transmits the downlink data packets at a time-frequency domain location corresponding to the resource.

Optionally, the message 2 further includes at least one of an uplink scheduling indication of the message 3 in the random access procedure, an uplink timing used for the uplink synchronization, or a signaling used for the uplink power control.

Optionally, the processor 2601 is further configured to: in a case that the terminal successfully receives the downlink data packets, stop transmitting the downlink data packets and/or establishing an air-interface signaling connection; or in a case that the terminal fails to receive the downlink data packet, the downlink scheduling indication and the downlink data packets are retransmitted to the terminal through the transceiver 2602; or in a case that the terminal fails to receive the downlink data packets, receive through the transceiver 2602 the message 3 of the random access procedure transmitted by the terminal, and transmit through the transceiver 2602 the message 4 of the random access procedure to the terminal.

Optionally, the paging message further carries a random access preamble index, and the message 1 in the random access procedure carries the random access preamble corresponding to the random access preamble index.

Optionally, the processor 2601 is further configured to: determine, according to service feature information of the downlink data packets, whether the downlink data packets need to be transmitted to the terminal or not, and configured to generate, according to a result of the determination, the data transmission indication; or determine, according to the service feature information of the downlink data packets and network side information, whether the downlink data packets need to be transmitted to the terminal or not, and configured to generate the data transmission indication according to a result of the determination.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features, or represented by a packet loss rate and a maximum allowable delay.

Optionally, the service feature information is obtained from packet headers of the downlink data packets transmitted by the core network; or the service feature information is transmitted by the core network through a signaling.

Optionally, the processor 2601 is further configured to: transparently transmit, to the terminal through the transceiver 2602, the paging message transmitted by the core network, wherein, the data transmission indication is an indication determined by the core network according to the service feature information of the downlink data packets, and indicating whether data needs to be transmitted or not; or the data transmission indication is an indication determined by the core network according to the service feature information of the downlink data packets and the network side information, and indicating whether data needs to be transmitted or not.

Optionally, the processor 2601 is further configured to: receive, through the transceiver 2602, a paging message transmitted by the core network, and determine, according to device parameters of the network side device, whether to modify the data transmission indication carried in the paging message or not; in a case that it is determined to not modify the data transmission indication carried in the paging message, transparently transmit, to the terminal through the transceiver 2602, the paging message transmitted by the core network; in a case that it is determined to modify the data transmission indication carried in the paging message, modify the data transmission indication carried in the paging message transmitted by the core network, and transmit, to the terminal through the transceiver 2602, the paging message carrying the modified data transmission indication.

Optionally, the processor 2601 is further configured to: in a case that the data transmission indication indicates the non-transmission, receive, through the transceiver 2602, the message 1 of the random access procedure transmitted by the terminal for requesting to enter a connected state.

In the network side device of the present disclosure, the paging message is transmitted to the terminal, and in a case that a data transmission indication indicating the transmission exists in the paging message, the downlink data packets are transmitted to the terminal. In this way, after the paging message is transmitted, the downlink data packets may be directly transmitted, a case in the related art that the downlink data packets may not be transmitted until an RRC connection is established after the paging message is received may not be needed, thereby reducing the delay of transmitting the downlink data packets.

Referring to Fig. 27, Fig. 27 is a structural diagram of a core network device of the present disclosure. The core network device may implement details of the data transmission method in the embodiment shown in Fig. 7 and the embodiment shown in Fig. 8, and achieve the same effect.

As shown in Fig. 27, the core network device 2700 includes a processor 2701, a transceiver 2702, a storage 2703, a user interface 2704, and a bus interface. The processor 2701 is configured to read programs in the storage 2703 and perform following steps: transmitting, through the transceiver 2702, a paging message to the network side device, wherein the paging message is used to indicate whether to transmit downlink data packets to the terminal or not; and transmitting, through the transceiver 2702, the downlink data packets to the network side device, so that the network side device may transmit the downlink data packets to the terminal according to the paging message.

The transceiver 2702 is configured to receive and transmit data under a control of the processor 2701.

In Fig. 27, a bus architecture may include any number of interconnected buses and bridges, specifically links one or more processors such as the processor 2701 and various circuits such as the storage 2703 together. The bus architecture may also link various other circuits such as peripheral devices, voltage regulators, and power management circuits, which are well known in the art and therefore will not be further described herein. The bus interface provides an interface. The transceiver 2702 may be a plurality of components, including a transmitter and a receiver, configured to provide means for communicating with various other devices through a transmission medium. For different user devices, the user interface 2704 may also be an interface capable of connecting external required devices, including but not limited to a keypad, a display, a speaker, a microphone, a joystick, and the like.

The processor 2701 is responsible for managing the bus architecture and usual processing transactions, and the storage 2703 may store data used by the processor 2701 when the processor 2701 performs operations.

Optionally, in a case that a random access preamble exists in the paging message, a data transmission indication indicating the transmission exists in the paging message; or the paging message includes a data transmission indication, and the data transmission indication is used to indicate the transmission or the non-transmission.

Optionally, the processor 2701 is further configured to: determine, according to service feature information of the downlink data packets, whether the network side device needs to transmit the downlink data packets to the terminal or not, and configured to generate, according to a result of the determination, the data transmission indication; or determine, according to the service feature information of the downlink data packets and network side information, whether the network side device needs to transmit the downlink data packets to the terminal or not, and configured to generate the data transmission indication according to a result of the determination.

Optionally, the network side information includes at least one of a network side load status or operator configuration data.

Optionally, the service feature information includes at least one of a service type, service cache information, a service quality requirement of a service, a service priority, or subscription information of the terminal.

Optionally, the service cache information is represented by a cache quantity or by a cache level; the service quality requirement is represented by a service quality parameter feature, or represented by numbers used for numbering groups of service quality parameter features, or represented by a packet loss rate and a maximum allowable delay.

Optionally, the processor 2701 is further configured to: transmit, through the transceiver 2702, the service feature information of the downlink data packets to the network side device, wherein the service feature information is transmitted by means of packet headers of the downlink data packets, or the service feature information is transmitted by means of a signaling.

In the core network device of the present disclosure, a paging message is transmitted to the network side device, and the paging message is used to indicate whether to transmit the downlink data packets to the terminal or not, and the downlink data packets are transmitted to the network side device, so that the network side device may transmit the downlink data packets to the terminal according to the paging message. In this way, through the paging message, the network side device may directly transmit the downlink data packets to the terminal, so that after the paging message is received, the RRC connection is not needed to be established in the related art to transmit the downlink data packets, thereby reducing the delay of transmitting the downlink data packets.

A person skilled in the art will appreciate that elements, algorithms, and steps of various examples described in connection with the embodiments disclosed herein may be implemented in electronic hardware or a combination of computer software and electronic hardware. Whether these functions are performed in hardware or software depends on the specific application and design constraints of the solution. The person skilled in the art may use different methods to implement the described functions for each particular application, but such implementation should not be considered to go beyond the scope of the present disclosure.

A person skilled in the art may clearly understand that for sake of easy and brief description, specific working processes of systems, devices and units described above may be obtained by referring to corresponding processes in the foregoing process embodiments, and details thereof are not described herein again.

In the embodiments provided by the present application, it should be understood that the disclosed apparatus and method may be implemented in other manners. For example, product embodiments described above are merely illustrative. For example, a division of the units is only a logical and functional division. In actual implementation, there may be another division manner, for example, multiple units or components may be combined or may be integrated into another system, or some features may be ignored or not executed. In addition, coupling or direct coupling or communication connection shown or discussed herein may be an indirect coupling or communication connection through some interfaces, devices or units, and may be electrical connections, mechanical connections or other forms of connections.

The units described as separate components may or may not be physically separated, and components displayed as units may or may not be physical units, that is, may be located in one place, or may be distributed to multiple network units. Some or all of the units may be selected according to actual needs to achieve objectives of the embodiments of the present disclosure.

In addition, each functional unit in various embodiments of the present disclosure may be integrated into one processing unit, or the units may exist physically separately, or two or more of the units may be integrated into one unit.

Functions of the units may be stored in a computer readable storage medium in a case that the units are implemented in a form of software functional units and sold or used as a standalone product. Based on such understanding, an essential portion of the technical solution of the present disclosure, or a portion of the technical solution that contributes to the related art, or a part of the technical solution may be embodied in a form of a software product stored in a storage medium. The software product includes several instructions for causing a computer device (which may be a personal computer, a server, or a network device, etc.) to perform all or part of the steps of the methods described in various embodiments of the present disclosure. The foregoing storage medium includes various medium that may store program codes, such as a USB flash drive, a removable hard disk, a ROM, a RAM, a magnetic disk, or an optical disk.

The above are only specific embodiments of the present disclosure. The scope of the present disclosure is not limited thereto, and any person skilled in the art may easily think of changes or substitutions within the technical scope of the disclosure, and all changes or substitutions should be covered within the protection scope of the present disclosure. Therefore, the protection scope of the disclosure should be determined by the scope of the claims.

## Claims

1. A method for transmitting downlink data packets, the method being performed by a terminal and comprising:
receiving (101, 201) a paging message transmitted by a network side device;
generating (202) a message 1 (Msg1) of a random access procedure according to the paging message, and transmitting reply information corresponding to a data transmission indication to the network side device through the message 1 of the random access procedure;
**characterized in that**,
the reply information comprises an identifier for indicating whether to receive downlink data packets transmitted by the network side device or not, wherein receiving the downlink data packets indicates that state transition is not performed, and not receiving the downlink data packets indicates that the state transition is performed;
the method further comprises:
in a case that the data transmission indication indicating transmission exists in the paging message, and the reply information indicates that the terminal is capable of receiving the downlink data packets transmitted by the network side device, receiving (102, 203) the downlink data packets transmitted by the network side device,
wherein the downlink data packets are transmitted by the network side device according to the reply information.

2. The method according to claim 1, wherein in a case that a random access preamble exists in the paging message, the data transmission indication indicating the transmission exists in the paging message; or
the paging message comprises the data transmission indication, and the data transmission indication is used to indicate the transmission or non-transmission.

3. The method according to claim 1, wherein the paging message further carries an air-interface identifier,
the receiving the downlink data packets transmitted by the network side device comprises:
receiving a message 2 (Msg2) of the random access procedure transmitted by the network side device, wherein the message 2 comprises a downlink scheduling indication and the downlink data packets;
decoding the message 2 according to the air-interface identifier, and acquiring the downlink scheduling indication;
determining time-frequency domain locations indicated by the downlink scheduling indication;
receiving, at the time-frequency domain locations, the downlink data packets transmitted by the network side device.

4. The method according to claim 3, wherein the downlink scheduling indication is used to indicate multiple resources, and the network side device repeatedly transmits downlink data packets at the time-frequency domain location corresponding to the multiple resources; or
the downlink scheduling indication is used to indicate multiple resources, and the network side device transmits multiple Redundancy Versions, RVs, of a same downlink data packet in time-frequency domain locations corresponding to the multiple resources; or
the downlink scheduling indication is used to indicate a resource, and the network side device transmits the downlink data packets at a time-frequency domain location corresponding to the resource;
and/or,
the message 2 further comprises at least one of an uplink scheduling indication of a message 3, Msg3, in the random access procedure, an uplink timing used for uplink synchronization, or a signaling used for an uplink power control.

5. The method according to any one of claims 1 to 4, wherein,
after the receiving (102, 203) the downlink data packets transmitted by the network side device, the method further comprises:
in a case that the downlink data packets transmitted by the network side device are successfully received, stopping receiving the downlink data packets and/or stopping establishing an air-interface signaling connection;
in a case that the downlink data packets transmitted by the network side device are not successfully received, receiving a downlink scheduling indication re-allocated by the network side device, and receiving, according to the downlink scheduling indication, downlink data packets retransmitted by the network side device; or
in a case that the downlink data packets transmitted by the network side device are not successfully received, transmitting the message 3 of the random access procedure to the network side device, wherein the message 3 is used to request to enter a connected state;
or,
the paging message further carries a random access preamble index, and the message 1 of the random access procedure carries a random access preamble corresponding to the random access preamble index;
or,
the data transmission indication is an indication indicating whether the network side device needs to transmit data or not and being determined by the network side device according to service feature information of the downlink data packets; or
the data transmission indication is an indication indicating whether the network side device needs to transmit data or not and being determined by the network side device according to the service feature information of the downlink data packets and network side information acquired by the network side device; or
the data transmission indication is a data transmission indication transmitted by the core network and received by the network side device; or
the data transmission indication is an indication obtained by the network side device through modifying the data transmission indication transmitted by the core network;
or,
after the receiving (101, 201)the paging message transmitted by the network side device, the method further comprises:
in a case that the data transmission indication indicates non-transmission, transmitting a message 1, Msg1, of a random access procedure to the network side device for requesting to enter a connected state.

6. A method for transmitting downlink data packets, the method being performed by a network side device and comprising:
transmitting (501, 601) a paging message to a terminal;
receiving (602) reply information corresponding to a data transmission indication and transmitted by the terminal through a message 1, Msg1, of a random access procedure;
**characterized in that**,
the reply information comprises an identifier for indicating whether to receive downlink data packets transmitted by the network side device or not, wherein receiving the downlink data packets indicates that state transition is not performed, and not receiving the downlink data packets indicates that the state transition is performed;
the method further comprises: in a case that the data transmission indication indicating transmission exists in the paging message, and the reply information indicates that the terminal is capable of receiving the downlink data packets transmitted by the network side device, transmitting (603) the downlink data packets to the terminal.

7. The method according to claim 6, wherein, in a case that a random access preamble exists in the paging message, the data transmission indication indicating the transmission exists in the paging message; or
the paging message comprises the data transmission indication, and the data transmission indication is used to indicate the transmission or non-transmission.

8. A terminal, comprising:
a paging message reception module (901) configured to receive a paging message transmitted by a network side device;
a reply information transmission module (903) configured to generate a message 1, Msg1, of a random access procedure according to the paging message, and transmitting reply information corresponding to a data transmission indication to the network side device through the message 1 of the random access procedure;
**characterized in that**,
the reply information comprises an identifier for indicating whether to receive downlink data packets transmitted by the network side device or not, wherein receiving the downlink data packets indicates that state transition is not performed, and not receiving the downlink data packets indicates that the state transition is performed;
the terminal further comprises:
a first data packet reception module (902) configured to: in a case that the data transmission indication indicating transmission exists in the paging message received by the paging message reception module (901) and the reply information indicates receiving the downlink data packets transmitted by the network side device, receive downlink data packets transmitted by the network side device,
wherein the downlink data packets are transmitted by the network side device according to the reply information.

9. The terminal according to claim 8, wherein in a case that a random access preamble exists in the paging message, the data transmission indication indicating the transmission exists in the paging message; or
the paging message comprises the data transmission indication, and the data transmission indication is used to indicate the transmission or non-transmission.

10. The method according to claim 8, wherein the paging message further carries an air-interface identifier,
the first data packet reception module (902) comprises:
a message reception unit (9021) configured to receive a message 2, Msg2, of the random access procedure transmitted by the network side device, wherein the message 2 comprises a downlink scheduling indication and the downlink data packets;
a data packet decoding unit (9022) configured to decode the message 2 according to the air-interface identifier, and acquire the downlink scheduling indication;
a determination unit (9023) configured to determine time-frequency domain locations indicated by the downlink scheduling indication;
a data packet reception unit (9024) configured to receive, at the time-frequency domain locations, the downlink data packets transmitted by the network side device.

11. The terminal according to claim 10, wherein the downlink scheduling indication is used to indicate multiple resources, and the network side device repeatedly transmits downlink data packets at the time-frequency domain location corresponding to the multiple resources; or
the downlink scheduling indication is used to indicate multiple resources, and the network side device transmits multiple Redundancy Versions, RVs, of a same downlink data packet in time-frequency domain locations corresponding to the multiple resources; or
the downlink scheduling indication is used to indicate a resource, and the network side device transmits the downlink data packets at a time-frequency domain location corresponding to the resource;
and/or,
the message 2 further comprises at least one of an uplink scheduling indication of a message 3, Msg3, in the random access procedure, an uplink timing used for uplink synchronization, or a signaling used for an uplink power control.

12. The terminal according to any one of claims 8 to 11, further comprises:
in a case that the downlink data packets transmitted by the network side device are successfully received, a signaling connection establishment module (905) configured to stop receiving the downlink data packets and/or stop establishing an air-interface signaling connection;
in a case that the downlink data packets transmitted by the network side device are not successfully received, a second data packet reception module (906) configured to receive a downlink scheduling indication re-allocated by the network side device, and receive, according to the downlink scheduling indication, downlink data packets retransmitted by the network side device; or
in a case that the downlink data packets transmitted by the network side device are not successfully received, a first message transmission module (907) configured to transmit the message 3 of the random access procedure to the network side device, wherein the message 3 is used to request to enter a connected state;
or,
the paging message further carries a random access preamble index, and the message 1 of the random access procedure carries a random access preamble corresponding to the random access preamble index;
or,
the data transmission indication is an indication indicating whether the network side device needs to transmit data or not and being determined by the network side device according to service feature information of the downlink data packets; or
the data transmission indication is an indication indicating whether the network side device needs to transmit data or not and being determined by the network side device according to the service feature information of the downlink data packets and network side information acquired by the network side device; or
the data transmission indication is a data transmission indication transmitted by the core network and received by the network side device; or
the data transmission indication is an indication obtained by the network side device through modifying the data transmission indication transmitted by the core network;
or,
the terminal further comprises:
in a case that the data transmission indication indicates non-transmission, a second message transmission module (908) configured to transmit a message 1, Msg1, of a random access procedure to the network side device for requesting to enter a connected state.

13. A network side device, comprising:
a first paging message transmission module (1501), configured to transmit a paging message to a terminal;
the network side device further comprises: a reply information reception module (1503) configured to receive reply information corresponding to a data transmission indication and transmitted by the terminal through a message 1, Msg1, of a random access procedure;
**characterized in that**,
the reply information comprises an identifier for indicating whether to receive downlink data packets transmitted by the network side device or not, wherein receiving the downlink data packets indicates that state transition is not performed, and not receiving the downlink data packets indicates that the state transition is performed;
the network side device further comprises:
a first data packet transmission module (1502) configured to: in a case that a data transmission indication indicating transmission exists in the paging message transmitted by the first paging message transmission module (1501) and the reply information indicates that the terminal is capable of receiving the downlink data packets transmitted by the network side device, transmit the downlink data packets to the terminal.

14. The network side device according to claim 13, wherein, in a case that a random access preamble exists in the paging message, the data transmission indication indicating the transmission exists in the paging message; or
the paging message comprises the data transmission indication, and the data transmission indication is used to indicate the transmission or non-transmission.

## Patentansprüche

1. Verfahren zum Übertragen von Downlink-Datenpaketen, wobei das Verfahren von einem Endgerät durchgeführt wird und Folgendes aufweist:
Empfangen (101, 201) einer Funkrufnachricht, die von einem netzseitigen Gerät übertragen wird;
Erzeugen (202) einer Nachricht 1 (Msg1) einer Zufallszugriffsprozedur gemäß der Funkrufnachricht, und Übertragen von Antwortinformationen, die einer Datenübertragungsanzeige entsprechen, an das netzseitige Gerät durch die Nachricht 1 der Zufallszugriffsprozedur,
**dadurch gekennzeichnet, dass**,
die Antwortinformationen eine Kennung aufweisen, die anzeigt, ob von dem netzseitigen Gerät übertragene Downlink-Datenpakete zu empfangen sind oder nicht, wobei ein Empfangen der Downlink-Datenpakete anzeigt, dass der Zustandsübergang nicht durchgeführt wird, und ein Nicht-Empfangen der Downlink-Datenpakete anzeigt, dass der Zustandsübergang durchgeführt wird;
das Verfahren ferner Folgendes aufweist:
in einem Fall, in dem die Datenübertragungsanzeige, die eine Übertragung anzeigt, in der Funkrufnachricht existiert, und die Antwortinformationen anzeigen, dass das Endgerät in der Lage ist, die von dem netzseitigen Gerät übertragenen Downlink-Datenpakete zu empfangen, Empfangen (102, 203) der von dem netzseitigen Gerät übertragenen Downlink-Datenpakete,
wobei die Downlink-Datenpakete von dem netzseitigen Gerät gemäß den Antwortinformationen übertragen werden.

2. Verfahren nach Anspruch 1, wobei in einem Fall, in dem eine Random-Access-Präambel in der Funkrufnachricht existiert, die Datenübertragungsanzeige, die die Übertragung anzeigt, in der Funkrufnachricht existiert; oder
die Funkrufnachricht die Datenübertragungsanzeige aufweist, und die Datenübertragungsanzeige verwendet wird, um die Übertragung oder Nichtübertragung anzuzeigen.

3. Verfahren nach Anspruch 1, wobei die Funkrufnachricht ferner eine Luftschnittstellenkennung trägt,
das Empfangen der von dem netzseitigen Gerät übertragenen Downlink-Datenpakete Folgendes aufweist:
Empfangen einer Nachricht 2 (Msg2) der Zufallszugriffsprozedur, die von dem netzseitigen Gerät übertragen wird, wobei die Nachricht 2 eine Downlink-Planungsanzeige und die Downlink-Datenpakete aufweist;
Dekodieren der Nachricht 2 gemäß der Luftschnittstellenkennung und Erfassen der Downlink-Planungsanzeige;
Bestimmen von Standorten im Zeit- und Frequenzbereich, die durch die Downlink-Planungsanzeige angezeigt werden;
Empfangen der von dem netzseitigen Gerät übertragenen Downlink-Datenpakete an den Standorten im Zeit- und Frequenzbereich.

4. Verfahren nach Anspruch 3, wobei die Downlink-Planungsanzeige verwendet wird, um mehrere Ressourcen anzuzeigen, und das netzseitige Gerät wiederholt Downlink-Datenpakete an dem Standort im Zeit- und Frequenzbereich, der den mehreren Ressourcen entspricht, überträgt; oder
die Downlink-Planungsanzeige verwendet wird, um mehrere Ressourcen anzuzeigen, und das netzseitige Gerät mehrere Redundanzversionen, RVs, desselben Downlink-Datenpakets an Standorten im Zeit- und Frequenzbereich, die den mehreren Ressourcen entsprechen, überträgt; oder
die Downlink-Planungsanzeige verwendet wird, um eine Ressource anzuzeigen, und das netzseitige Gerät die Downlink-Datenpakete an einem Standort im Zeit- und Frequenzbereich, die der Ressource entspricht, überträgt;
und/oder,
die Nachricht 2 ferner Folgendes aufweist: eine Uplink-Planungsanzeige einer Nachricht 3, Msg3, in der Zufallszugriffsprozedur, und/oder ein Uplink-Timing, das für die Uplink-Synchronisierung verwendet wird, und/oder eine Signalisierung, die für eine Uplink-Leistungssteuerung verwendet wird.

5. Verfahren nach einem der Ansprüche 1 bis 4, wobei,
nach dem Empfangen (102, 203) der von dem netzseitigen Gerät übertragenen Downlink-Datenpakete, das Verfahren ferner Folgendes aufweist:
in einem Fall, in dem die von dem netzseitigen Gerät übertragenen Downlink-Datenpakete erfolgreich empfangen werden, Beenden des Empfangens der Downlink-Datenpakete und/oder Beenden des Aufbauens einer Luftschnittstellen-Signalisierungsverbindung;
in einem Fall, dass die von dem netzseitigen Gerät übertragenen Downlink-Datenpakete nicht erfolgreich empfangen werden, Empfangen einer von dem netzseitigen Gerät neu zugewiesenen Downlink-Planungsanzeige und Empfangen von von dem netzseitigen Gerät erneut übertragenen Downlink-Datenpaketen gemäß der Downlink-Planungsanzeige; oder
in einem Fall, in dem die von dem netzseitigen Gerät übertragenen Downlink-Datenpakete nicht erfolgreich empfangen werden, Übertragen der Nachricht 3 der Zufallszugriffsprozedur an das netzseitige Gerät, wobei die Nachricht 3 verwendet wird, um anzufordern, in einen Verbindungszustand einzutreten;
oder,
die Funkrufnachricht ferner einen Index für eine Random-Access-Präambel trägt, und die Nachricht 1 des der Zufallszugriffsprozedur eine Random-Access-Präambel trägt, die dem Index für die Random-Access-Präambel entspricht;
oder,
die Datenübertragungsanzeige eine Anzeige ist, die anzeigt, ob das netzseitige Gerät Daten übertragen muss oder nicht, und die von dem netzseitigen Gerät gemäß Leistungsmerkmalsinformationen der Downlink-Datenpakete bestimmt wird; oder
die Datenübertragungsanzeige eine Anzeige ist, die anzeigt, ob das netzseitige Gerät Daten übertragen muss oder nicht, und die von dem netzseitigen Gerät gemäß den Leistungsmerkmalsinformationen der Downlink-Datenpakete und den von dem netzseitigen Gerät erfassten netzseitigen Informationen bestimmt wird; oder
die Datenübertragungsanzeige eine Datenübertragungsanzeige ist, die von dem Kernnetz übertragen und von dem netzseitigen Gerät empfangen wird; oder
die Datenübertragungsanzeige eine Anzeige ist, die von dem netzseitigen Gerät durch Modifizieren der vom Kernnetz übertragenen Datenübertragungsanzeige erhalten wird;
oder,
nach dem Empfangen (101, 201) der von dem netzseitigen Gerät übertragenen Funkrufnachricht, das Verfahren ferner Folgendes aufweist:
in einem Fall, in dem die Datenübertragungsanzeige eine Nichtübertragung anzeigt, das Übertragen einer Nachricht 1, Msg1, einer Zufallszugriffsprozedur an das netzseitige Gerät, um den Eintritt in einen Verbindungszustand anzufordern.

6. Verfahren zum Übertragen von Downlink-Datenpaketen, wobei das Verfahren von einem netzseitigen Gerät durchgeführt wird und Folgendes aufweist:
Übertragen (501, 601) einer Funkrufnachricht an ein Endgerät;
Empfangen (602) von Antwortinformationen, die einer Datenübertragungsanzeige entsprechen und von dem Endgerät durch eine Nachricht 1, Msg1, einer Zufallszugriffsprozedur übertragen werden;
**dadurch gekennzeichnet, dass**,
die Antwortinformationen eine Kennung aufweisen, die anzeigt, ob von dem netzseitigen Gerät übertragene Downlink-Datenpakete zu empfangen sind oder nicht, wobei ein Empfangen der Downlink-Datenpakete anzeigt, dass der Zustandsübergang nicht durchgeführt wird, und ein Nicht-Empfangen der Downlink-Datenpakete anzeigt, dass der Zustandsübergang durchgeführt wird;
das Verfahren ferner Folgendes aufweist: in einem Fall, in dem die Datenübertragungsanzeige, die eine Übertragung anzeigt, in der Funkrufnachricht existiert, und die Antwortinformationen anzeigen, dass das Endgerät in der Lage ist, die von dem netzseitigen Gerät übertragenen Downlink-Datenpakete zu empfangen, Übertragen (603) der Downlink-Datenpakete an das Endgerät.

7. Verfahren nach Anspruch 6, wobei in einem Fall, in dem eine Random-Access-Präambel in der Funkrufnachricht existiert, die Datenübertragungsanzeige, die die Übertragung anzeigt, in der Funkrufnachricht existiert; oder
die Funkrufnachricht die Datenübertragungsanzeige aufweist, und die Datenübertragungsanzeige verwendet wird, um die Übertragung oder Nichtübertragung anzuzeigen.

8. Endgerät mit:
einem Funkrufnachricht-Empfangsmodul (901), das so konfiguriert ist, dass es eine Funkrufnachricht empfängt, die von einem netzseitigen Gerät übertragen wird;
einem Antwortinformationen-Übertragungsmodul (903), das so konfiguriert ist, dass es eine Nachricht 1, Msg1, einer Zufallszugriffsprozedur gemäß der Funkrufnachricht erzeugt und Antwortinformationen, die einer Datenübertragungsanzeige entsprechen, über die Nachricht 1 der Zufallszugriffsprozedur an das netzseitige Gerät überträgt;
**dadurch gekennzeichnet, dass**,
die Antwortinformationen eine Kennung aufweisen, die anzeigt, ob von dem netzseitigen Gerät übertragene Downlink-Datenpakete zu empfangen sind oder nicht, wobei ein Empfangen der Downlink-Datenpakete anzeigt, dass der Zustandsübergang nicht durchgeführt wird, und ein Nicht-Empfangen der Downlink-Datenpakete anzeigt, dass der Zustandsübergang durchgeführt wird;
das Endgerät ferner Folgendes aufweist:
ein erstes Datenpaket-Empfangsmodul (902), das so konfiguriert ist, dass es in einem Fall, in dem die Datenübertragungsanzeige, die eine Übertragung anzeigt, in der von dem Funkrufnachricht-Empfangsmodul (901) empfangenen Funkrufnachricht existiert und die Antwortinformationen das Empfangen der von dem netzseitigen Gerät übertragenen Downlink-Datenpakete anzeigt, Downlink-Datenpakete empfängt, die von dem netzseitigen Gerät übertragen werden,
wobei die Downlink-Datenpakete von dem netzseitigen Gerät gemäß den Antwortinformationen übertragen werden.

9. Endgerät nach Anspruch 8, wobei in einem Fall, in dem eine Random-Access-Präambel in der Funkrufnachricht existiert, die Datenübertragungsanzeige, die die Übertragung anzeigt, in der Funkrufnachricht existiert; oder
die Funkrufnachricht die Datenübertragungsanzeige aufweist, und die Datenübertragungsanzeige verwendet wird, um die Übertragung oder Nichtübertragung anzuzeigen.

10. Verfahren nach Anspruch 8, wobei die Funkrufnachricht ferner eine Luftschnittstellenkennung trägt,
das erste Datenpaket-Empfangsmodul (902) Folgendes aufweist:
eine Nachrichtenempfangseinheit (9021), die so konfiguriert ist, dass sie eine Nachricht 2, Msg2, der Zufallszugriffsprozedur empfängt, die von dem netzseitigen Gerät übertragen wird, wobei die Nachricht 2 eine Downlink-Planungsanzeige und die Downlink-Datenpakete aufweist;
eine Datenpaket-Dekodiereinheit (9022), die so konfiguriert ist, dass sie die Nachricht 2 gemäß der Luftschnittstellenkennung dekodiert und die Downlink-Planungsanzeige erfasst;
eine Bestimmungseinheit (9023), die so konfiguriert ist, dass sie Standorten im Zeit- und Frequenzbereich bestimmt, die durch die Downlink-Planungsanzeige angezeigt werden;
eine Datenpaket-Empfangseinheit (9024), die so konfiguriert ist, dass sie an den Standorten im Zeit- und Frequenzbereich die von dem netzseitigen Gerät übertragenen Downlink-Datenpakete empfängt.

11. Endgerät nach Anspruch 10, wobei die Downlink-Planungsanzeige verwendet wird, um mehrere Ressourcen anzuzeigen, und das netzseitige Gerät wiederholt Downlink-Datenpakete an dem Standort im Zeit- und Frequenzbereich, der den mehreren Ressourcen entspricht, überträgt; oder
die Downlink-Planungsanzeige verwendet wird, um mehrere Ressourcen anzuzeigen, und das netzseitige Gerät mehrere Redundanzversionen, RVs, desselben Downlink-Datenpakets an Standorten im Zeit- und Frequenzbereich, die den mehreren Ressourcen entsprechen, überträgt; oder
die Downlink-Planungsanzeige verwendet wird, um eine Ressource anzuzeigen, und das netzseitige Gerät die Downlink-Datenpakete an einem Standort im Zeit- und Frequenzbereich, die der Ressource entspricht, überträgt;
und/oder,
die Nachricht 2 ferner Folgendes aufweist: eine Uplink-Planungsanzeige einer Nachricht 3, Msg3, in der Zufallszugriffsprozedur, und/oder ein Uplink-Timing, das für die Uplink-Synchronisierung verwendet wird, und/oder eine Signalisierung, die für eine Uplink-Leistungssteuerung verwendet wird.

12. Endgerät nach einem der Ansprüche 8 bis 11 ferner Folgendes aufweist:
für den Fall, dass die von dem netzseitigen Gerät übertragenen Downlink-Datenpakete erfolgreich empfangen werden, ein Signalisierungsverbindungs-Aufbaumodul (905), das so konfiguriert ist, dass es Empfangen der Downlink-Datenpakete beendet und/oder Aufbauen einer Luftschnittstellen-Signalisierungsverbindung beendet;
in einem Fall, dass die von dem netzseitigen Gerät übertragenen Downlink-Datenpakete nicht erfolgreich empfangen werden, ein zweites Datenpaket-Empfangsmodul (906), das so konfiguriert ist, dass es eine von dem netzseitigen Gerät neu zugewiesene Downlink-Planungsanzeige empfängt und gemäß der Downlink-Planungsanzeige Downlink-Datenpakete empfängt, die von dem netzseitigen Gerät erneut übertragen werden; oder
in einem Fall, dass die von dem netzseitigen Gerät übertragenen Downlink-Datenpakete nicht erfolgreich empfangen werden, ein erstes Nachricht-Übertragungsmodul (907), das so konfiguriert ist, dass es die Nachricht 3 der Zufallszugriffsprozedur an das netzseitige Gerät überträgt, wobei die Nachricht 3 verwendet wird, um anzufordern, in einen Verbindungszustand einzutreten;
oder,
die Funkrufnachricht ferner einen Index für eine Random-Access-Präambel trägt, und die Nachricht 1 der Zufallszugriffsprozedur eine Random-Access-Präambel trägt, die dem Index für die Random-Access-Präambel entspricht;
oder,
die Datenübertragungsanzeige eine Anzeige ist, die anzeigt, ob das netzseitige Gerät Daten übertragen muss oder nicht, und die von dem netzseitigen Gerät gemäß Leistungsmerkmalsinformationen der Downlink-Datenpakete bestimmt wird; oder
die Datenübertragungsanzeige eine Anzeige ist, die anzeigt, ob das netzseitige Gerät Daten übertragen muss oder nicht, und die von dem netzseitigen Gerät gemäß den Leistungsmerkmalsinformationen der Downlink-Datenpakete und den von dem netzseitigen Gerät erfassten netzseitigen Informationen bestimmt wird; oder
die Datenübertragungsanzeige eine Datenübertragungsanzeige ist, die von dem Kernnetz übertragen und von dem netzseitigen Gerät empfangen wird; oder
die Datenübertragungsanzeige eine Anzeige ist, die von dem netzseitigen Gerät durch Modifizieren der vom Kernnetz übertragenen Datenübertragungsanzeige erhalten wird;
oder,
das Endgerät ferner Folgendes aufweist:
in einem Fall, in dem die Datenübertragungsanzeige eine Nichtübertragung anzeigt, ein zweites Nachricht-Übertragungsmodul (908), das so konfiguriert ist, dass es eine Nachricht 1, Msg1, einer Zufallszugriffsprozedur an das netzseitige Gerät überträgt, um den Eintritt in einen Verbindungszustand anzufordern.

13. Netzseitiges Gerät mit:
einem ersten Funkrufnachricht-Übertragungsmodul (1501), das so konfiguriert ist, dass es eine Funkrufnachricht an ein Endgerät überträgt;
wobei das netzseitige Gerät ferner Folgendes aufweist: ein Antwortinformationen-Empfangsmodul (1503), das so konfiguriert ist, dass es Antwortinformationen empfängt, die einer Datenübertragungsanzeige entsprechen und von dem Endgerät durch eine Nachricht 1, Msg1, einer Zufallszugriffsprozedur übertragen werden;
**dadurch gekennzeichnet, dass**,
die Antwortinformationen eine Kennung aufweisen, die anzeigt, ob von dem netzseitigen Gerät übertragene Downlink-Datenpakete zu empfangen sind oder nicht, wobei ein Empfangen der Downlink-Datenpakete anzeigt, dass ein Zustandsübergang nicht durchgeführt wird, und ein Nicht-Empfangen der Downlink-Datenpakete anzeigt, dass der Zustandsübergang durchgeführt wird;
das netzseitige Gerät ferner Folgendes aufweist:
ein erstes Datenpaket-Übertragungsmodul (1502), das so konfiguriert ist, dass es in einem Fall, in dem eine Datenübertragungsanzeige, die eine Übertragung anzeigt, in der von dem ersten Funkrufnachricht-Übertragungsmodul (1501) übertragenen Funkrufnachricht existiert, und die Antwortinformationen anzeigen, dass das Endgerät in der Lage ist, die von dem netzseitigen Gerät übertragenen Downlink-Datenpakete zu empfangen, die Downlink-Datenpakete an das Endgerät überträgt.

14. Netzseitiges Gerät nach Anspruch 13, wobei in einem Fall, in dem eine Random-Access-Präambel in der Funkrufnachricht existiert, die Datenübertragungsanzeige, die die Übertragung anzeigt, in der Funkrufnachricht existiert; oder
die Funkrufnachricht die Datenübertragungsanzeige aufweist und die Datenübertragungsanzeige verwendet wird, um die Übertragung oder Nichtübertragung anzuzeigen.

## Revendications

1. Procédé de transmission de paquets de données de liaison descendante, le procédé étant effectué par un terminal et comprenant :
la réception (101,201) d'un message de radiomessagerie transmis par un dispositif côté réseau ;
la génération (202) d'un message 1 (Msg1) d'une procédure d'accès aléatoire en fonction du message de radiomessagerie, et la transmission d'informations de réponse correspondant à une indication de transmission de données au dispositif côté réseau par le biais du message 1 de la procédure d'accès aléatoire ;
**caractérisé en ce que**,
les informations de réponse comprennent un identifiant pour indiquer s'il faut recevoir ou non des paquets de données de liaison descendante transmis par le dispositif côté réseau, dans lequel la réception des paquets de données de liaison descendante indique qu'une transition d'état n'est pas effectuée, et la non-réception des paquets de données de liaison descendante indique que la transition d'état est effectuée ;
le procédé comprend en outre :
dans un cas où l'indication de transmission de données indiquant la transmission existe dans le message de radiomessagerie, et où les informations de réponse indiquent que le terminal est capable de recevoir les paquets de données de liaison descendante transmis par le dispositif côté réseau, la réception (102, 203) des paquets de données de liaison descendante par le dispositif côté réseau,
dans lequel les paquets de données de liaison descendante sont transmis par le dispositif côté réseau en fonction des informations de réponse.

2. Procédé selon la revendication 1, dans lequel dans un cas où un préambule d'accès aléatoire existe dans le message de radiomessagerie, l'indication de transmission de données indiquant la transmission existe dans le message de radiomessagerie ; ou
le message de radiomessagerie comprend l'indication de transmission de données, et l'indication de transmission de données est utilisée pour indiquer la transmission ou non-transmission.

3. Procédé selon la revendication 1, dans lequel le message de radiomessagerie porte en outre un identifiant d'interface radio,
la réception des paquets de données de liaison descendante transmis par le dispositif côté réseau comprend :
la réception d'un message 2 (Msg2) de la procédure d'accès aléatoire transmis par le dispositif côté réseau, dans lequel le message 2 comprend une indication de planification de liaison descendante et les paquets de données de liaison descendante ;
le décodage du message 2 en fonction de l'identifiant d'interface radio, et l'acquisition de l'indication de planification de liaison descendante ;
la détermination d'emplacements de domaine temporel-fréquentiel indiqués par l'indication de planification de liaison descendante ;
la réception, au niveau des emplacements de domaine temporel-fréquentiel, des paquets de données de liaison descendante transmis par le dispositif côté réseau.

4. Procédé selon la revendication 3, dans lequel l'indication de planification de liaison descendante est utilisée pour indiquer de multiples ressources, et le dispositif côté réseau transmet de façon répétée des paquets de données de liaison descendante au niveau de l'emplacement de domaine temporel-fréquentiel correspondant aux multiples ressources ; ou
l'indication de planification de liaison descendante est utilisée pour indiquer de multiples ressources, et le dispositif côté réseau transmet de multiples versions de redondance, RV, d'un même paquet de données de liaison descendante dans des emplacements de domaine temporel-fréquentiel correspondant aux multiples ressources ; ou
l'indication de planification de liaison descendante est utilisée pour indiquer une ressource, et le dispositif côté réseau transmet les paquets de données de liaison descendante au niveau d'un emplacement de domaine temporel-fréquentiel correspondant à la ressource ;
et/ou,
le message 2 comprend en outre au moins une parmi une indication de planification de liaison montante d'un message 3, Msg3, dans la procédure d'accès aléatoire, un moment de liaison montante utilisé pour une synchronisation de liaison montante, ou une signalisation utilisée pour une commande d'alimentation de liaison montante.

5. Procédé selon l'une quelconque des revendications 1 à 4, dans lequel,
après la réception (102, 203) des paquets de données de liaison descendante transmis par le dispositif côté réseau, le procédé comprend en outre :
dans un cas où les paquets de données de liaison descendante transmis par le dispositif côté réseau sont reçus avec succès, l'arrêt de la réception des paquets de données de liaison descendante et/ou l'arrêt de l'établissement d'une connexion de signalisation d'interface radio ;
dans un cas où les paquets de données de liaison descendante transmis par le dispositif côté réseau ne sont pas reçus avec succès, la réception d'une indication de planification de liaison descendante réattribuée par le dispositif côté réseau, et la réception, en fonction de l'indication de planification de liaison descendante, de paquets de données de liaison descendante retransmis par le dispositif côté réseau ; ou
dans un cas où les paquets de données de liaison descendante transmis par le dispositif côté réseau ne sont pas reçus avec succès, la transmission du message 3 de la procédure d'accès aléatoire au dispositif côté réseau, dans lequel le message 3 est utilisé pour demander d'entrer dans un état connecté ;
ou,
le message de radiomessagerie porte en outre un indice de préambule d'accès aléatoire, et le message 1 de la procédure d'accès aléatoire porte un préambule d'accès aléatoire correspondant à l'indice de préambule d'accès aléatoire ;
ou,
l'indication de transmission de données est une indication indiquant si le dispositif côté réseau a besoin de transmettre des données ou non et étant déterminée par le dispositif côté réseau en fonction d'informations de caractéristiques de service des paquets de données de liaison descendante ; ou
l'indication de transmission de données est une indication indiquant si le dispositif côté réseau a besoin de transmettre des données ou non et étant déterminée par le dispositif côté réseau en fonction des informations de caractéristiques de service des paquets de données de liaison descendante et d'informations côté réseau acquises par le dispositif côté réseau ; ou
l'indication de transmission de données est une indication de transmission de données transmise par le réseau central et reçue par le dispositif côté réseau ; ou
l'indication de transmission de données est une indication obtenue par le dispositif côté réseau par le biais d'une modification de l'indication de transmission de données transmise par le réseau central ;
ou,
après la réception (101, 201) du message de radiomessagerie transmis par le dispositif côté réseau, le procédé comprend en outre :
dans un cas où l'indication de transmission de données indique une non-transmission, la transmission d'un message 1, Msg1, d'une procédure d'accès aléatoire au dispositif côté réseau pour demander d'entrer dans un état connecté.

6. Procédé de transmission de paquets de données de liaison descendante, le procédé étant effectué par un dispositif côté réseau et comprenant :
la transmission (501, 601) d'un message de radiomessagerie à un terminal ;
la réception (602) d'informations de réponse correspondant à une indication de transmission de données et transmises par le terminal par le biais d'un message 1, Msg1, d'une procédure d'accès aléatoire ;
**caractérisé en ce que**,
les informations de réponse comprennent un identifiant pour indiquer s'il faut recevoir ou non des paquets de données de liaison descendante transmis par le dispositif côté réseau, dans lequel la réception des paquets de données de liaison descendante indique qu'une transition d'état n'est pas effectuée, et la non-réception des paquets de données de liaison descendante indique que la transition d'état est effectuée ;
le procédé comprend en outre : dans un cas où l'indication de transmission de données indiquant la transmission existe dans le message de radiomessagerie, et où les informations de réponse indiquent que le terminal est capable de recevoir les paquets de données de liaison descendante transmis par le dispositif côté réseau, la transmission (603) des paquets de données de liaison descendante au terminal.

7. Procédé selon la revendication 6, dans lequel, dans un cas où un préambule d'accès aléatoire existe dans le message de radiomessagerie, l'indication de transmission de données indiquant la transmission existe dans le message de radiomessagerie ; ou
le message de radiomessagerie comprend l'indication de transmission de données, et l'indication de transmission de données est utilisée pour indiquer la transmission ou non-transmission.

8. Terminal, comprenant :
un module de réception de message de radiomessagerie (901) configuré pour recevoir un message de radiomessagerie transmis par un dispositif côté réseau ;
un module de transmission d'informations de réponse (903) configuré pour générer un message 1, Msg1, d'une procédure d'accès aléatoire en fonction du message de radiomessagerie, et la transmission d'informations de réponse correspondant à une indication de transmission de données au dispositif côté réseau par le biais du message 1 de la procédure d'accès aléatoire ;
**caractérisé en ce que**,
les informations de réponse comprennent un identifiant pour indiquer s'il faut recevoir ou non des paquets de données de liaison descendante transmis par le dispositif côté réseau, dans lequel la réception des paquets de données de liaison descendante indique qu'une transition d'état n'est pas effectuée, et la non-réception des paquets de données de liaison descendante indique que la transition d'état est effectuée ;
le terminal comprend en outre :
un premier module de réception de paquets de données (902) configuré pour : dans un cas où l'indication de transmission de données indiquant une transmission existe dans le message de radiomessagerie reçu par le module de réception de message de radiomessagerie (901) et où les informations de réponse indiquent la réception des paquets de données de liaison descendante transmis par le dispositif côté réseau, recevoir des paquets de données de liaison descendante transmis par le dispositif côté réseau,
dans lequel les paquets de données de liaison descendante sont transmis par le dispositif côté réseau en fonction des informations de réponse.

9. Terminal selon la revendication 8, dans lequel dans un cas où un préambule d'accès aléatoire existe dans le message de radiomessagerie, l'indication de transmission de donnes indiquant la transmission existe dans le message de radiomessagerie ; ou
le message de radiomessagerie comprend l'indication de transmission de données, et l'indication de transmission de données est utilisée pour indiquer la transmission ou non-transmission.

10. Procédé selon la revendication 8, dans lequel le message de radiomessagerie porte en outre un identifiant d'interface radio,
le premier module de réception de paquets de données (902) comprend :
une unité de réception de message (9021) configurée pour recevoir un message 2, Msg2, de la procédure d'accès aléatoire transmis par le dispositif côté réseau, dans lequel le message 2 comprend une indication de planification de liaison descendante et les paquets de données de liaison descendante ;
une unité de décodage de paquets de données (9022) configurée pour décoder le message 2 en fonction de l'identifiant d'interface radio, et acquérir l'indication de planification de liaison descendante ;
une unité de détermination (9023) configurée pour déterminer des emplacements de domaine temporel-fréquentiel indiqués par l'indication de planification de liaison descendante ;
une unité de réception de paquets de données (9024) configurée pour recevoir, au niveau des emplacements de domaine temporel-fréquentiel, les paquets de données de liaison descendante transmis par le dispositif côté réseau.

11. Terminal selon la revendication 10, dans lequel l'indication de planification de liaison descendante est utilisée pour indiquer de multiples ressources, et le dispositif côté réseau transmet de façon répétée des paquets de données de liaison descendante au niveau de l'emplacement de domaine temporel-fréquentiel correspondant aux multiples ressources ; ou
l'indication de planification de liaison descendante est utilisée pour indiquer de multiples ressources, et le dispositif côté réseau transmet de multiples versions de redondance, RV, d'un même paquet de données de liaison descendante dans des emplacements de domaine temporel-fréquentiel correspondant aux multiples ressources ; ou
l'indication de planification de liaison descendante est utilisée pour indiquer une ressource, et le dispositif côté réseau transmet les paquets de données de liaison descendante au niveau d'un emplacement de domaine temporel-fréquentiel correspondant à la ressource ;
et/ou,
le message 2 comprend en outre au moins une parmi une indication de planification de liaison montante d'un message 3, Msg3, dans la procédure d'accès aléatoire, un moment de liaison montante utilisé pour une synchronisation de liaison montante, ou une signalisation utilisée pour une commande d'alimentation de liaison montante.

12. Terminal selon l'une quelconque des revendications 8 à 11, comprenant en outre :
dans un cas où les paquets de données de liaison descendante transmis par le dispositif côté réseau sont reçus avec succès, un module d'établissement de connexion de signalisation (905) configuré pour arrêter la réception des paquets de données de liaison descendante et/ou arrêter l'établissement d'une connexion de signalisation d'interface radio ;
dans un cas où les paquets de données de liaison descendante transmis par le dispositif côté réseau ne sont pas reçus avec succès, un second module de réception de paquets de données (906) configuré pour recevoir une indication de planification de liaison descendante réattribuée par le dispositif côté réseau, et recevoir, en fonction de l'indication de planification de liaison descendante, des paquets de données de liaison descendante retransmis par le dispositif côté réseau ; ou
dans un cas où les paquets de données de liaison descendante transmis par le dispositif côté réseau ne sont pas reçus avec succès, un premier module de transmission de message (907) configuré pour transmettre le message 3 de la procédure d'accès aléatoire au dispositif côté réseau, dans lequel le message 3 est utilisé pour demander d'entrer dans un état connecté ;
ou,
le message de radiomessagerie porte en outre un indice de préambule d'accès aléatoire, et le message 1 de la procédure d'accès aléatoire porte un préambule d'accès aléatoire correspondant à l'indice de préambule d'accès aléatoire ;
ou,
l'indication de transmission de données est une indication indiquant si le dispositif côté réseau a besoin de transmettre des données ou non et étant déterminée par le dispositif côté réseau en fonction d'informations de caractéristiques de service des paquets de données de liaison descendante ; ou
l'indication de transmission de données est une indication indiquant si le dispositif côté réseau a besoin de transmettre des données ou non et étant déterminée par le dispositif côté réseau en fonction des informations de caractéristiques de service des paquets de données de liaison descendante et d'informations côté réseau acquises par le dispositif côté réseau ; ou
l'indication de transmission de données est une indication de transmission de données transmise par le réseau central et reçue par le dispositif côté réseau ; ou
l'indication de transmission de données est une indication obtenue par le dispositif côté réseau par le biais d'une modification de l'indication de transmission de données transmise par le réseau central ;
ou,
le terminal comprend en outre :
dans un cas où l'indication de transmission de données indique une non-transmission, un second module de transmission de message (908) configuré pour transmettre un message 1, Msg1, d'une procédure d'accès aléatoire au dispositif côté réseau pour demander d'entrer dans un état connecté.

13. Dispositif côté réseau, comprenant :
un premier module de transmission de message de radiomessagerie (1501), configuré pour transmettre un message de radiomessagerie à un terminal ;
le dispositif côté réseau comprend en outre : un module de réception d'informations de réponse (1503) configuré pour recevoir des informations de réponse correspondant à une indication de transmission de données et transmises par le terminal par le biais d'un message 1, Msg1, d'une procédure d'accès aléatoire ;
**caractérisé en ce que**,
les informations de réponse comprennent un identifiant pour indiquer s'il faut recevoir ou non des paquets de données de liaison descendante transmis par le dispositif côté réseau, dans lequel la réception des paquets de données de liaison descendante indique qu'une transition d'état n'est pas effectuée, et la non-réception des paquets de données de liaison descendante indique que la transition d'état est effectuée ;
le dispositif côté réseau comprend en outre :
un premier module de transmission de paquets de données (1502) configuré pour : dans un cas où une indication de transmission de données indiquant une transmission existe dans le message de radiomessagerie transmis par le premier module de transmission de message de radiomessagerie (1501) et les informations de réponse indiquent que le terminal est capable de recevoir les paquets de données de liaison descendante transmis par le dispositif côté réseau, transmettre les paquets de données de liaison descendante au terminal.

14. Dispositif côté réseau selon la revendication 13, dans lequel, dans un cas où un préambule d'accès aléatoire existe dans le message de radiomessagerie, l'indication de transmission de données indiquant la transmission existe dans le message de radiomessagerie ; ou
le message de radiomessagerie comprend l'indication de transmission de données, et l'indication de transmission de données est utilisée pour indiquer la transmission ou non-transmission.
